# EUROPEAN PATENT APPLICATION

(11) **EP 4 848 187 A1**
(43) Date of publication of application: **02.12.2026**
(21) Application number: 26180991.7
(22) Date of filing: 26.05.2026
(51) Int. Cl.: G06Q 30/0601, G06Q 10/0875

(54) **AUTOMATED VEHICLE PARTS FITMENT MANAGEMENT SYSTEM**

(30) Priority: 28.05.2025 US 202519221174
(71) Applicant: eBay Inc., San Jose, CA 95125 (US)
(72) Inventor: CHALKLEY, Andrew, San Jose, 95125 (US); KRISHNASAMY, Harish Kumar, San Jose, 95125 (US); TONG, Joanne, San Jose, 95125 (US); ALVA, Shobith, San Jose, 95125 (US)
(74) Representative: Müller-Boré & Partner Patentanwälte PartG mbB

(57) **Abstract**

A system is provided that augments listings with fitment information. The system maintains a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier. The system accesses a listing for a vehicle part associated with a vehicle, the listing comprising vehicle fitment information including a vehicle identifier. The system searches, based on the vehicle identifier, for the vehicle part in the compatibility catalog to retrieve the set of vehicle tokens associated with the vehicle identifier and automatically updates the vehicle fitment information in the listing for the vehicle part based on the set of vehicle tokens retrieved from the compatibility catalog.

## Description

### TECHNICAL FIELD

The subject matter disclosed herein generally relates to a special-purpose machine that includes a system for providing automated vehicle parts fitment management, including computerized variants of such special-purpose machines and improvements to such variants, and to the technologies by which such special-purpose machines become improved compared to other special-purpose machines.

### BACKGROUND

In e-commerce platforms, fitment refers to the compatibility between vehicle parts and specific vehicles. Fitment data consists of descriptive attributes, such as year, make, model, trim, and engine specifications, that identify which vehicles are compatible with a particular part. When sellers list vehicle parts on e-commerce platforms, they include fitment information to help buyers determine if the part will work with their specific vehicle. Fitment data is important for both sellers who need to accurately describe their products and buyers who need to find parts compatible with their vehicles.

### BRIEF SUMMARY

In some aspects, the techniques described herein relate to a system including: one or more hardware processors; and at least one machine-storage medium for storing instructions that, when executed by the one or more hardware processors, cause the one or more hardware processors to perform operations including: maintaining a compatibility catalog storing vehicle fitment data separately from listing data, the vehicle fitment data including a set of vehicle tokens that describe vehicle characteristics for determining compatibility of parts, each set of vehicle tokens stored in the compatibility catalog being associated with a respective vehicle identifier; accessing a listing for a vehicle part associated with a vehicle, the listing including vehicle fitment information including a vehicle identifier; searching, based on the vehicle identifier, for the vehicle part in the compatibility catalog to retrieve the set of vehicle tokens associated with the vehicle identifier; and automatically updating the vehicle fitment information in the listing for the vehicle part based on the set of vehicle tokens (and/or based on vehicle fitment data) retrieved from the compatibility catalog. In some cases, the compatibility catalog stores a notional profile group identifier associated with a list of vehicle identifiers (e.g., notional profile identifiers). A notional profile service can store associations between the group identifier and the list of vehicle identifiers and an association between a vehicle identifier and a set of vehicle tokens. Collectively all of this information can be referred to as a compatibility catalog.

Specifically, in some aspects, the techniques described herein relate to a system including: one or more hardware processors; and at least one machine-storage medium for storing instructions that, when executed by the one or more hardware processors, cause the one or more hardware processors to perform operations including: maintaining a compatibility catalog storing vehicle fitment data separately from listing data, the compatibility catalog storing notional profile group identifiers that are associated with sets of vehicle identifiers, wherein each vehicle identifier is associated with a respective set of vehicle tokens that describe vehicle characteristics for determining compatibility of parts; accessing a listing for a vehicle part associated with a vehicle, the listing including vehicle fitment information including a vehicle identifier; searching, based on the vehicle identifier, for the vehicle part in the compatibility catalog to retrieve the set of vehicle tokens associated with the vehicle identifier through the notional profile service; and automatically updating the vehicle fitment information in the listing for the vehicle part based on the set of vehicle tokens (and/or vehicle fitment data) retrieved via the compatibility catalog.

In some aspects, the techniques described herein relate to a system, wherein the operations further include: receiving a user opt-in status indicating whether automatic enhancement of vehicle fitment information is enabled for listings associated with the user; and in response to determining that the opt-in status indicates that the automatic enhancement is enabled for the listing, automatically triggering updating the vehicle fitment information in the listing for the vehicle part based on the set of vehicle tokens (and/or vehicle fitment data) retrieved from the compatibility catalog.

In some aspects, the techniques described herein relate to a system, wherein the operations further include: receiving a user opt-in status indicating whether automatic enhancement of vehicle fitment information is enabled for listings associated with the user; and in response to determining that the opt-in status indicates that the automatic enhancement is disabled for the listing, automatically preventing updating the vehicle fitment information in the listing for the vehicle part based on the set of vehicle tokens retrieved from the compatibility catalog.

In some aspects, the techniques described herein relate to a system, wherein the operations further include triggering a rollback of enhanced vehicle fitment information for the listing.

In some aspects, the techniques described herein relate to a system, wherein the operations further include generating fitment status events tracking changes made to vehicle fitment information.

In some aspects, the techniques described herein relate to a system, wherein the set of vehicle tokens include year, model, make, and trim information. In some cases, the set of vehicle tokens comprise different combinations of descriptive attributes based on vehicle type, locale, and applicable standards. For example, for vehicles in North America, the tokens may include year, make, model, trim and engine information; for vehicles in Germany, the tokens may include year, make, model, type, platform and engine information; and for motorcycles, the tokens may include year, make, model and sub-model information.

In some aspects, the techniques described herein relate to a system, wherein the operations include detecting a status change associated with the listing; and based on the status change, selecting whether to enhance or clean the vehicle fitment information in the listing.

In some aspects, the techniques described herein relate to a system, wherein the operations include detecting, as the status change, a change to a naming convention of an individual vehicle token; determining that the individual vehicle token is included as part of the vehicle fitment information; and automatically cleaning the vehicle fitment information in the listing by updating the naming convention of the individual vehicle token in the listing.

In some aspects, the techniques described herein relate to a system, wherein the operations include detecting, as the status change, that the listing has been updated to include the vehicle fitment information including a first group of vehicle tokens; and automatically enhancing the vehicle fitment information in the listing by adding a second group of vehicle tokens to the listing.

In some aspects, the techniques described herein relate to a system, wherein the operations include storing a database including the compatibility catalog, the database associating different parts with different vehicle grouping identifiers, each vehicle grouping identifier associated with a set of vehicle identifiers, each vehicle identifier in the set of vehicle identifiers being associated with a respective set of vehicle tokens.

In some aspects, the techniques described herein relate to a system, wherein a first part is associated with a first vehicle grouping identifier, the first vehicle grouping identifier being associated with a first plurality of vehicle identifiers, and wherein the first plurality of vehicle identifiers includes a first vehicle identifier associated with a first set of vehicle tokens and a second vehicle identifier associated with a second set of vehicle tokens.

In some aspects, the techniques described herein relate to a system, wherein the operations include: detecting that the listing includes the vehicle part; searching the database to retrieve a first vehicle grouping identifier corresponding to the vehicle part; retrieving a first plurality of vehicle identifiers associated with the first vehicle grouping identifier; retrieving a plurality of vehicle tokens associated with the first plurality of vehicle identifiers; and automatically adding the plurality of vehicle tokens associated with the first plurality of vehicle identifiers to the listing.

In some aspects, the techniques described herein relate to a system, wherein the operations include: after automatically adding the plurality of vehicle tokens associated with the first plurality of vehicle identifiers to the listing, modifying the first vehicle grouping identifier associated with the vehicle part; and automatically updating the plurality of vehicle tokens associated with the first plurality of vehicle identifiers of the listing to reflect the modified first vehicle grouping identifier.

In some aspects, the techniques described herein relate to a system, wherein the operations include: determining a part type for the vehicle part that is in the listing; and selecting which subsets of vehicle tokens to extract from the plurality of vehicle tokens to be added to the listing based on the part type, wherein a first group of vehicle tokens are extracted for a first part type and a second group of vehicle tokens are extracted for a second part type.

In some aspects, the techniques described herein relate to a system, wherein the operations include: determining a geographical location associated with the listing; and selecting which subsets of vehicle tokens to extract from the plurality of vehicle tokens to be added to the listing based on the geographical location, wherein a first group of vehicle tokens are extracted for a first geographical location and a second group of vehicle tokens are extracted for a second geographical location.

In some aspects, the techniques described herein relate to a system, wherein the operations include receiving a request for vehicle tokens associated with an individual vehicle part; and searching the database to retrieve a first vehicle grouping identifier corresponding to the individual vehicle part.

In some aspects, the techniques described herein relate to a system, wherein the operations include retrieving a first plurality of vehicle identifiers associated with the first vehicle grouping identifier; and retrieving a plurality of vehicle tokens associated with the first plurality of vehicle identifiers.

In some aspects, the techniques described herein relate to a system, wherein the operations include generating a response to the request including the plurality of vehicle tokens associated with the first plurality of vehicle identifiers.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a diagrammatic representation of a networked environment in which the present disclosure may be deployed, in accordance with some examples.
FIG. 2 is a diagram of an illustrative vehicle parts management platform, in accordance with some examples.
FIG. 3 is a diagram of an illustrative vehicle parts management platform, in accordance with some examples.
FIG. 4 is a diagram of an illustrative compatibility catalog, in accordance with some examples.
FIG. 5 illustrates example inputs and outputs of the vehicle parts management platform, in accordance with some examples.
FIG. 6 illustrates a routine performed by the vehicle parts management platform, in accordance with some examples.
FIG. 7 is a block diagram illustrating a representative software architecture, which may be used in conjunction with various hardware architectures herein described, in accordance with some examples.
FIG. 8 is a diagrammatic representation of a machine in the form of a computer system within which a set of instructions may be executed for causing the machine to perform any one or more of the methodologies discussed herein, in accordance with some examples.

### DETAILED DESCRIPTION

The description that follows describes systems, methods, techniques, instruction sequences, and computing machine program products that illustrate examples of the present subject matter. In the following description, for purposes of explanation, numerous specific details are set forth in order to provide an understanding of various examples of the present subject matter. It will be evident, however, to those skilled in the art, that examples of the present subject matter may be practiced without some or other of these specific details. Examples merely typify possible variations. Unless explicitly stated otherwise, structures (e.g., structural components, such as modules) are optional and may be combined or subdivided, and operations (e.g., in a procedure, algorithm, or other function) may vary in sequence or be combined or subdivided.

In e-commerce marketplaces, vehicle parts compatibility management is important for connecting buyers with the right parts for their specific vehicles. Fitment data enables sellers to specify which vehicles are compatible with their parts and helps buyers find parts that will work with their vehicles. This compatibility information is typically represented through descriptive attributes, such as year, make, model, trim, and engine specifications. When properly implemented, fitment data creates a seamless shopping experience by allowing buyers to filter search results based on their specific vehicle and giving sellers confidence that their parts are being matched with the appropriate vehicles. The management of this fitment data presents unique technical challenges due to the volume of vehicle specifications, frequent updates from standards bodies, and the need to maintain consistency across millions of listings from various sellers.

Conventional vehicle parts fitment management systems suffer from significant technical inefficiencies that waste computing resources and impair system performance in such management. Conventional approaches store fitment data directly within listing data in centralized databases, creating a tightly coupled architecture that requires extensive processing resources whenever fitment information needs to be updated. When standards bodies update vehicle specifications, which can periodically and/or at different intervals, these systems may need to individually revise each affected listing. This can trigger resource-intensive batch processes that often fail to complete successfully. This results in inconsistent data states where some listings are updated while others remain outdated, creating orphaned vehicle records that waste storage resources and compromise search accuracy.

The technical architecture of conventional systems further compounds these inefficiencies by requiring duplicate storage of identical fitment information across multiple listings. When token naming conventions change (such as "electric" being updated to "battery EV"), the conventional system may need to scan through millions of listings to locate and update each instance, consuming substantial processor cycles, network bandwidth, and database resources. This deep copy problem forces the system to maintain and synchronize multiple copies of the same information across distributed systems, with selling teams, search teams, and catalog teams each maintaining their own copies of the data that frequently become out of sync.

Additionally, conventional approaches lack the technical capability to efficiently handle the varying resolution requirements for different product types and markets. The rigid token structure forces unnecessary processing of irrelevant vehicle characteristics, as the conventional system cannot selectively process only the tokens relevant to a particular part type. For example, windshield wipers may only require year, make, and model information, while brake pads might need additional engine specifications, yet conventional systems process all tokens uniformly, wasting computational resources on unnecessary data processing. This inflexibility also creates technical barriers when expanding to new markets with different vehicle specification standards, requiring complex data transformation processes that further strain system resources.

The present application describes a novel system that addresses these technical challenges. The disclosed system maintains a compatibility catalog storing vehicle fitment data separately from listing data, with vehicle tokens describing vehicle characteristics for determining parts compatibility, each set of tokens being associated with a respective vehicle identifier. By implementing a unique identifier system called notional profile IDs that map to sets of vehicle tokens, the disclosed system enables automatic updating of vehicle fitment information across multiple listings when token information changes. This disclosed approach can solve the "deep copy" problem by assigning identifiers to sets of tokens and adding version information to these identifiers when updates occur, which can eliminate the need to update identifiers in all listings where they appear. The disclosed system further organizes these profile IDs into groupings that can be associated with specific products, allowing seamless compatibility management across different marketplaces and vehicle types. As a result, the disclosed system reduces computing resources and improves efficiency in managing vehicle part fitment information while providing sellers with control through opt-in/opt-out functionality.

Specifically, the disclosed techniques can reduce resource waste and improve efficiency of conventional approaches by eliminating the need for batch processing and repeated database operations when vehicle token information changes. By implementing a layer of abstraction through the notional profile ID system, the disclosed techniques avoid having to update every individual listing when token information changes (such as when "electric" changes to "battery EV"), which significantly reduces processor cycles, network traffic, and database operations. Additionally, the disclosed system's architecture allows for automatic propagation of updates across all affected listings without manual intervention, reducing the computational resources previously required to track and update orphaned or out-of-sync vehicle information across distributed systems.

In some examples, the disclosed system maintains a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier. The disclosed system accesses a listing for a vehicle part associated with a vehicle, the listing including vehicle fitment information including a vehicle identifier. The disclosed system searches, based on the vehicle identifier, for the vehicle part in the compatibility catalog to retrieve the set of vehicle tokens associated with the vehicle identifier and automatically updates the vehicle fitment information in the listing for the vehicle part based on the set of vehicle tokens retrieved from the compatibility catalog.

As a result, one or more of the methodologies described herein facilitate solving the technical problem of inventory management presented by conventional methods. As such, one or more of the methodologies described herein may obviate a need for certain efforts or computing resources that otherwise would be involved in managing vehicle part fitment information. As a result, resources used by one or more machines, databases, or devices (e.g., within the environment) may be reduced. Examples of such computing resources include processor cycles, network traffic, memory usage, data storage capacity, power consumption, network bandwidth, and cooling capacity.

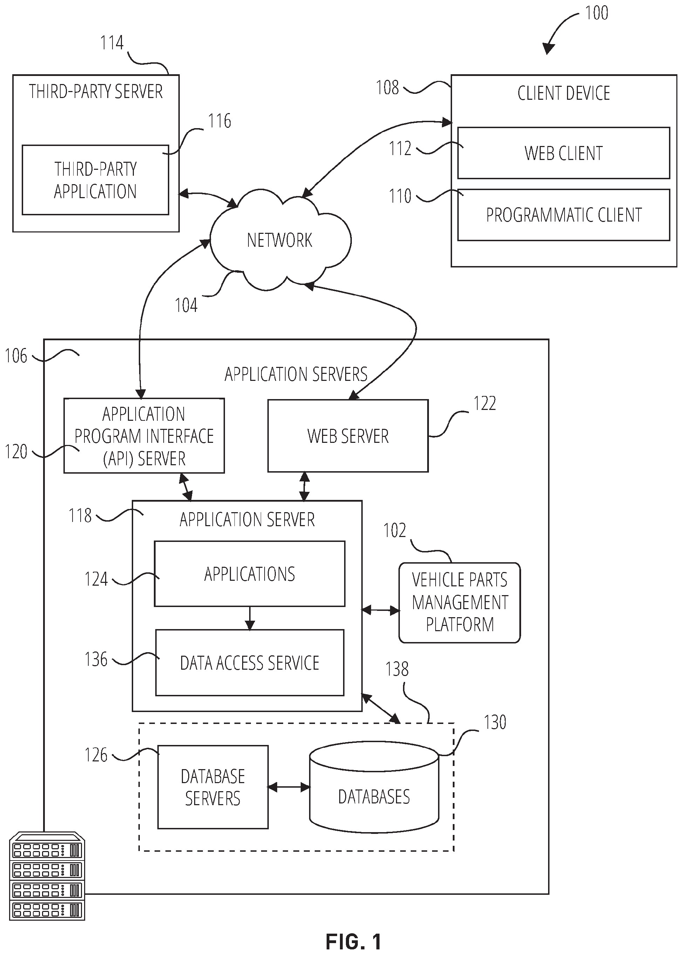

FIG. 1 is a diagrammatic representation of a network environment 100 in which some examples of the present disclosure may be implemented or deployed. One or more application servers 106 provide server-side functionality via a network 104 to a networked user device, in the form of a client device 108. A web client 112 (e.g., a browser) and a programmatic client 110 (e.g., an "app") are hosted and execute on the web client 112.

An Application Program Interface (API) server 120 and a web server 122 provide respective programmatic and web interfaces to application servers 106. A specific application server 118 hosts an applications 124 and a data access service 136, which includes components, modules and/or applications.

The applications 124 may provide a number of functions and services to users who access the application servers 106. For example, the applications 124 may include a publication application that enables users to publish content (e.g., product item information) on a hosted web page. While the applications 124 is shown in FIG. 1 to be part of the application servers 106, it will be appreciated that, in alternative examples, the applications 124 may be separate and distinct from the application server 118. The applications 124 can also enable buyers to purchase items from an online electronic commerce platform where users can buy and sell physical (tangible) and/or intangible items.

The data access service 136 coordinates requests from the applications 124 to access services provided by vehicle parts management platform 102 and to access data stored in one or more cache nodes and/or databases 130 of the data access layer 138. For example, the data access service 136 coordinates transaction requests from the applications 124 across distributed database servers of the vehicle parts management platform 102. In some cases, the data access service 136 can be part of or can include some or all of the functionality of the vehicle parts management platform 102.

Further, while the network environment 100 shown in FIG. 1 employs a client-server architecture, the examples are, of course, not limited to such an architecture, and could equally well find application in a distributed, or peer-to-peer, architecture system. The applications 124 could also be implemented as a standalone software program, which do not necessarily have networking capabilities.

The web client 112 accesses the applications 124 via the web interface supported by the web server 122. Similarly, the programmatic client 110 accesses the various services, microservices, and functions provided by the applications 124 via the programmatic interface provided by the Application Program Interface (API) server 120. In one example, the programmatic client 110 may, for example, be a seller application (e.g., eBay Application developed by eBay Inc., of San Jose, California) to enable sellers to author and manage listings on the network environment 100 in an offline manner, and to perform batch-mode communications between the programmatic client 110 and the application servers 106. In one example, the programmatic client 110 may, for example, be a buyer (purchaser) application (e.g., eBay Application developed by eBay Inc., of San Jose, California) to enable buyers to search available listings for items on the network environment 100 in an online manner, to select items to purchase, and to perform batch-mode communications between the programmatic client 110 and the application servers 106.

FIG. 1 also illustrates a third-party application 116 executing on a third-party server 114 as having programmatic access to the application servers 106 via the programmatic interface provided by the Application Program Interface (API) server 120. For example, the third-party application 116 may, utilizing information retrieved from the application server 118, support one or more features or functions on a website hosted by a third party. The third-party website may, for example, provide one or more promotional, marketplace, or payment functions that are supported by the relevant applications of the application servers 106.

Any of the systems or machines (e.g., databases, devices, servers) shown in, or associated with, FIG. 1 may be implemented in a special-purpose (e.g., specialized or otherwise non-generic) computer that has been modified (e.g., configured or programmed by software, such as one or more software modules of an application, operating system, firmware, middleware, or other program) to perform one or more of the functions described herein for that system or machine. For example, a special-purpose computer system able to implement any one or more of the methodologies described herein is discussed below, and such a special-purpose computer may accordingly be a means for performing any one or more of the methodologies discussed herein. Within the technical field of such special-purpose computers, a special-purpose computer that has been modified by the structures discussed herein to perform the functions discussed herein is technically improved compared to other special-purpose computers that lack the structures discussed herein or are otherwise unable to perform the functions discussed herein. Accordingly, a special-purpose machine configured according to the systems and methods discussed herein provides an improvement to the technology of similar special-purpose machines.

Moreover, any two or more of the systems or machines illustrated in FIG. 1 may be combined into a single system or machine, and the functions described herein for any single system or machine may be subdivided among multiple systems or machines. Additionally, any number and types of client device 108 may be embodied within the network environment 100. Furthermore, some components or functions of the network environment 100 may be combined or located elsewhere in the network environment 100. For example, some of the functions of the client device 108 may be embodied at the application server 118.

In some examples, the network environment 100 includes the vehicle parts management platform 102, which is a specialized system designed to address technical challenges in managing vehicle parts fitment information across e-commerce listings. As illustrated in FIG. 1, the vehicle parts management platform 102 operates within network environment 100 that includes application servers 106, client devices 108, and third-party servers 114 connected via a network 104. The vehicle parts management platform 102 serves as a component for automating and enhancing the management of vehicle part compatibility information.

The vehicle parts management platform 102 can be integrated with an application server 118 that hosts applications 124 and a data access service 136. This integration allows the platform to coordinate with various components of the network environment, including the Application Program Interface (API) server 120 and web server 122, which provide programmatic and web interfaces to the application servers. The platform interacts with databases 130 through database servers 126 within the data access layer 138.

Users can access the vehicle parts management platform 102 through client devices 108 using either a web client 112 or a programmatic client 110. In certain implementations, the web client 112 accesses the vehicle parts management platform 102 via the web interface supported by the web server 122, while the programmatic client interacts through the API server 120. This dual-access approach enables both online and offline management of vehicle part listings and fitment information.

A component of the vehicle parts management platform 102 is the compatibility catalog system that stores vehicle fitment data separately from listing data. The compatibility catalog maintains a set of vehicle tokens that describe vehicle characteristics, with each set associated with a respective vehicle identifier. This separation allows for efficient management and updating of vehicle compatibility information across multiple listings.

The vehicle tokens can include information such as year, model, make, and trim details that are important for determining part compatibility. In some circumstances, by associating these tokens with unique vehicle identifiers, the vehicle parts management platform 102 creates a structured approach to managing compatibility information. This structure enables the vehicle parts management platform 102 to maintain consistent and accurate fitment data across the marketplace.

In various implementations, the vehicle parts management platform 102 implements a notional profile system that assigns unique identifiers (notional profile IDs) to sets of vehicle tokens. This vehicle parts management platform 102 can solve the "deep copy" problem by allowing token information to be updated centrally without requiring changes to individual listings. When updates occur, such as changing "electric" to "battery EV" in vehicle descriptions, the vehicle parts management platform 102 can add version information to the identifiers rather than updating each listing individually. The vehicle parts management platform 102 organizes notional profile IDs into groupings that represent collections of compatible vehicles for specific products. These groupings can be stored in the compatibility catalog and associated with particular vehicle parts. This approach allows for efficient management of compatibility information and enables seamless updates when compatibility data changes.

The vehicle parts management platform 102 can perform a systematic process for enhancing listings with fitment information. This process includes maintaining a compatibility catalog storing vehicle fitment data, accessing a listing for a vehicle part associated with a vehicle, searching for the vehicle part in the compatibility catalog based on the vehicle identifier, and automatically updating the vehicle fitment information in the listing. For example, a seller (e.g., a user) can list (creates an e-commerce listing for) brake rotors and ceramic brake pads for a 2016 Tesla Model S on an e-commerce platform of the vehicle parts management platform 102. Initially, the seller might only include basic vehicle information such as the year (2016), make (Tesla), and model (S) in the listing or other vehicle identifier.

The enhancement process performed by the vehicle parts management platform 102 can begin when the vehicle parts management platform 102 detects this newly created listing through its event-driven architecture. A fitment filter component identifies this listing as a candidate for enhancement based on the vehicle identifier included in the listing. The vehicle parts management platform 102 then searches the compatibility catalog for the vehicle part (brake pads) (and other vehicle tokens) associated with the vehicle identifier. In this case, the compatibility catalog contains comprehensive vehicle token information for various Tesla Model S trim levels that are compatible with these specific brake pads.

Upon searching the compatibility catalog, the vehicle parts management platform 102 retrieves the complete set of vehicle tokens associated with the vehicle identifier. For the 2016 Tesla Model S, this includes not just the basic year, make, and model information, but also detailed trim information (70D Sedan 4-Door, 85D Sedan 4-Door, P90D Sedan 4-Door, etc.) and engine specifications (BATTERY EV). The vehicle parts management platform 102 recognizes that these additional vehicle tokens represent vehicles that are also compatible with the listed brake pads but were not included in the original listing. The vehicle parts management platform 102 then automatically updates (e.g., augments) the vehicle fitment information in the listing by adding these additional compatible vehicle configurations (e.g., additional vehicle tokens). The enhanced listing can now display a comprehensive compatibility table showing all seven compatible vehicle configurations with their respective year, make, model, trim, and engine information. This enhancement significantly improves the listing's discoverability and provides buyers with precise compatibility information, increasing the likelihood of conversion. The seller can view these enhancements through their dashboard and has the option to opt out of this automatic enhancement process if desired, providing control while maintaining the benefits of automated fitment management.

In some examples, the vehicle parts management platform 102 includes an enhancement and cleaning service that listens to enhance item events and clean events. The enhance item algorithm identifies opportunities to add or remove fitments from listings, while the clean event algorithm updates naming conventions and ensures consistency across listings. This automation can significantly reduce the processing resources and effort required for managing fitment information.

The platform employs an event-driven architecture where the fitment filter component listens to item update events and item new events. When these events occur, the vehicle parts management platform 102 determines whether to enhance or clean the associated listings based on various factors, including seller preferences and marketplace settings. This reactive approach ensures timely updates to fitment information across the marketplace.

In certain implementations, the vehicle parts management platform 102 provides sellers with control over the enhancement process through opt-in/opt-out functionality. When a seller opts in, the vehicle parts management platform 102 automatically enhances their listings with updated fitment information. Conversely, if a seller opts out, the vehicle parts management platform 102 prevents automatic updates and can trigger a rollback of previously enhanced information. This user-centric approach balances automation with seller control.

The vehicle parts management platform 102 generates fitment status events that track changes made to vehicle fitment information. These events are stored and can be used to generate reports on enhancement activities, providing transparency and accountability in the fitment management process. This tracking capability is important for monitoring the effectiveness of the enhancement system and identifying potential issues. In some circumstances, the vehicle parts management platform 102 maintains a database that associates different parts with different vehicle grouping identifiers. Each vehicle grouping identifier is linked to a set of vehicle identifiers, and each vehicle identifier is associated with a respective set of vehicle tokens. This hierarchical structure enables efficient storage and retrieval of compatibility information.

For example, the vehicle parts management platform 102 generates comprehensive fitment status events that track changes made to vehicle fitment information across the e-commerce ecosystem. As shown in FIG. 1, these events are processed through the data access service 136, which coordinates with the databases 130 via database servers 126 within the data access layer 138. When a vehicle token is updated, such as when "electric" is changed to "battery EV" in a vehicle description, the vehicle parts management platform 102 generates a fitment status event that records this change, the affected listings, and the timestamp of the modification.

For example, consider a scenario where a standards body updates its vehicle catalog to reflect more accurate engine specifications for a 2016 Tesla Model S. The vehicle parts management platform 102 detects this change through its event-driven architecture and generates a fitment status event. This event captures details about which vehicle tokens were modified, which listings were affected, and whether the change was part of an enhancement or cleaning operation. These events are then stored in the databases 130, creating a comprehensive audit trail of all fitment-related changes.

The vehicle parts management platform 102 leverages these stored fitment status events to generate weekly reports that provide sellers and administrators with insights into enhancement activities. These reports might include metrics such as the number of listings enhanced, the types of changes made, and the impact on listing visibility and conversion rates. This reporting capability provides transparency into the automated enhancement process and helps stakeholders understand how the system is improving fitment information across the marketplace.

The hierarchical database structure implemented by the vehicle parts management platform 102 is important to its efficient operation. As illustrated in FIG. 1, the platform maintains connections between the application server 118 and the databases 130 through the data access service 136. Within these databases, the vehicle parts management platform 102 establishes a sophisticated relationship structure where vehicle parts are associated with vehicle grouping identifiers, which are in turn linked to sets of vehicle identifiers. Each vehicle identifier corresponds to a specific set of vehicle tokens that describe characteristics such as year, make, model, and trim information. This multi-level association enables the platform to efficiently manage compatibility information at scale while minimizing data redundancy.

The vehicle parts management platform 102 supports cross-market compatibility by establishing relationships between vehicle profiles in different regions. For example, a BMW 3 series in Germany and the UK may have different vehicle token sets but represent the same vehicle. The vehicle parts management platform 102 can translate fitments between markets, allowing listings to display appropriate compatibility information regardless of the marketplace.

In various examples, the vehicle parts management platform 102 accommodates different levels of vehicle token specificity based on part types and requirements. For some parts, like windshield wipers, a minimal set of tokens (e.g., year, make, model) may be sufficient, while other parts may require additional tokens. This flexibility allows for appropriate resolution of vehicle information based on the specific compatibility needs of different parts.

For example, the vehicle parts management platform 102 adapts its token requirements based on the specific needs of different vehicle part types. For example, windshield wipers typically require less specific vehicle information to determine compatibility compared to more complex parts like brake systems or engine components. For windshield wipers, the vehicle parts management platform 102 may only need to consider basic vehicle tokens such as year, make, and model to establish compatibility, while ignoring more specialized tokens like trim level or engine specifications that would be unnecessary for this part type. This adaptive approach is implemented through the notional profile system, where different part types can be associated with different subsets of vehicle tokens extracted from the comprehensive vehicle identifiers stored in the compatibility catalog. In some cases, each vehicle identifier can be associated with multiple sets of vehicle tokens, allowing the vehicle parts management platform 102 to select the appropriate token subset based on the part type.

For more complex parts like brake pads, the vehicle parts management platform 102 may require a more comprehensive set of vehicle tokens including year, make, model, trim, and engine specifications to ensure proper fitment. The platform's flexibility in token specificity significantly improves efficiency by avoiding unnecessary processing of irrelevant vehicle characteristics for certain part types. This approach also enhances the user experience by presenting only the relevant compatibility information needed for a particular part type, making it easier for buyers to determine whether a part will fit their specific vehicle. The system can determine the part type for a vehicle part in a listing and select appropriate subsets of vehicle tokens based on that determination. Different part types may require different token sets for accurate compatibility matching. This adaptive approach ensures that compatibility information is relevant and precise for each specific part type.

In some implementations, the platform can customize token selection based on the geographical location associated with a listing. Different regions may use different vehicle descriptors or require different levels of detail in compatibility information. By adapting to these regional differences, the system ensures appropriate fitment information across global marketplaces. The platform provides API access for retrieving vehicle tokens associated with specific vehicle parts. This functionality allows external systems and applications to leverage the platform's compatibility data, extending its utility beyond the core marketplace. The API returns comprehensive vehicle token information based on the vehicle grouping identifiers associated with requested parts.

By implementing the notional profile ID system and grouping mechanism, the vehicle parts management platform 102 significantly reduces computational resources required for managing fitment information. The vehicle parts management platform 102 eliminates the need for batch processing and repeated database operations when vehicle token information changes, as updates can be propagated automatically through the reference layer. This approach transforms what was previously a resource-intensive manual process into an efficient automated system.

The data access service 136 coordinates requests from applications to access services provided by the vehicle parts management platform and to access data stored in databases. The vehicle parts management platform 102 represents a comprehensive solution to the technical challenges of managing vehicle part compatibility information in e-commerce environments. Through its innovative use of notional profiles, grouping mechanisms, and automated enhancement processes, the platform significantly improves efficiency, accuracy, and scalability in fitment management while providing sellers with appropriate control over their listings.

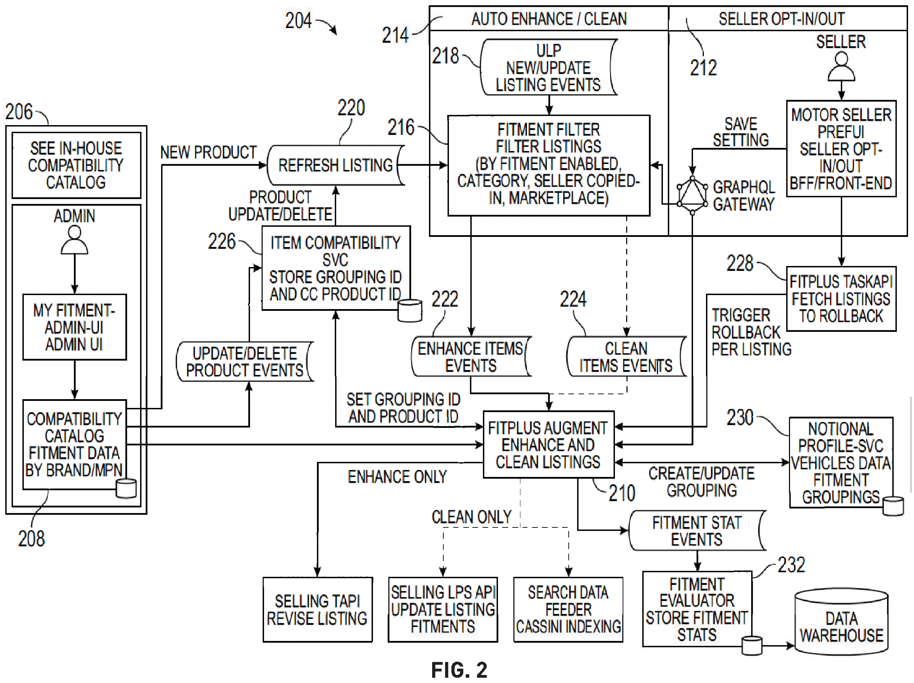

FIG. 2 is a diagram 204 of one implementation of the vehicle parts management platform 102 of FIG. 1, in accordance with some examples. Specifically, the diagram 204 illustrates an automated vehicle parts fitment management system that facilitates the enhancement and cleaning of vehicle fitment information in listings. The system can include multiple interconnected components that work together to manage vehicle compatibility data.

In some examples, the vehicle parts management platform 102 includes a seller control component 212 that enables sellers to opt in or opt out of automatic enhancement of vehicle fitment information for their listings. This seller control component 212 interfaces with a listing enhancement component 214 (e.g., motor seller preference user interface [UI]) that provides a front-end interface for sellers to manage their preferences.

The vehicle parts management platform 102 may receive listing events through a unified listing platform (ULP) component (e.g., listing update component 218), which generates new and update listing events. These events are processed by a listing filtering component 216 that filters listings based on various criteria such as fitment enablement, category, seller opt-in status, and marketplace. In some cases, the listing filtering component 216 determines whether to enhance or clean listings based on the received events. The listing filtering component 216 can send enhance item events 222 or clean item events 224 to a listing augmentation system 210, which is implemented as a FitplusAugment service that handles both enhancement and cleaning of listings.

"Enhance" and "clean" operations differ in the vehicle parts management platform 102 as they relate to distinct purposes and the types of changes they make to listings. Enhance operations focus on adding additional compatible vehicle fitments to a listing. When the vehicle parts management platform 102 determines that a listing could benefit from enhancement, it sends an "enhance item event" to the listing augmentation system 210 (FitplusAugment service). The enhancement process takes an item listing and identifies opportunities to add more compatible vehicles, adds additional vehicle tokens (year, make, model, trim, and so forth) that are compatible with the part being sold, and improves the discoverability of listings by showing more vehicles that are compatible with the part. For example, if a seller lists brake pads for a Ford F-150 with only a few specific model years, the enhance operation might add additional compatible Ford F-150 model years and trims that were identified from the compatibility catalog.

Clean operations focus on updating existing vehicle fitment information to maintain consistency when naming conventions or vehicle specifications change. When the vehicle parts management platform 102 detects such changes, it sends a "clean item event" to the listing augmentation system 210. The cleaning process updates naming conventions of individual vehicle tokens in listings, ensures consistency across the marketplace when standards bodies update vehicle descriptions, corrects outdated vehicle specifications, and maintains accuracy of search results. For example, as mentioned in the documents, if a vehicle engine that was previously classified as "electric" is updated to "BATTERY EV (EV/BEV)" in the standards catalog, the clean operation would update all listings containing the old "electric" designation to the new "BATTERY EV (EV/BEV)" designation.

The listing filtering component 216 determines whether to enhance or clean listings based on item update events (when sellers change titles, add fitments, and so forth), item new events (when new listings are created), and catalog updates (when admins add or change fitments). The system then sends the appropriate event type (enhance or clean) to the FitplusAugment service based on the nature of the change required and the seller's opt-in status. Both operations ultimately aim to improve the accuracy and completeness of vehicle fitment information, but they address different aspects of maintaining the listing data, where enhancement adds new compatible vehicles, while cleaning updates existing information to maintain consistency.

The listing augmentation system 210 may interface with a compatibility database 208 to revise listings and update fitment information. This listing augmentation system 210 can also generate fitment stat events that are processed by a fitment evaluator component 232, which stores fitment statistics in a data warehouse for reporting purposes.

For compatibility data management, the listing augmentation system 210 includes a compatibility catalog system 206 that maintains fitment data organized by brand and manufacturer part number (MPN). This compatibility catalog system 206 interfaces with a notional profile service 230 that stores vehicle data and fitment groupings. For example, the compatibility catalog system 206 can serve as a central repository for vehicle fitment data that is organized by brand and MPN, forming the backbone of the listing augmentation system 210. This catalog maintains a structured database of vehicle compatibility information that is separate from the actual listing data, allowing for efficient management and updates of fitment information across multiple listings simultaneously. The compatibility catalog interfaces with the notional profile service (e.g., fitment grouping component 230), which stores vehicle data and fitment groupings using a sophisticated identifier system that enables temporal isolation from changes in different systems while still referring to the same underlying vehicle entity.

The compatibility catalog system 206 employs a hierarchical data structure that associates vehicle parts with compatible vehicles through multiple layers of abstraction. For example, when a brake pad manufacturer releases a new product, the compatibility catalog can store the relationship between that specific part (identified by brand and MPN) and a collection of vehicle identifiers that represent compatible vehicles. Each vehicle identifier is then associated with a set of vehicle tokens (such as year, make, model, trim, and engine information) that describe the specific characteristics of compatible vehicles. This multilayered approach allows the system to efficiently manage compatibility information at scale.

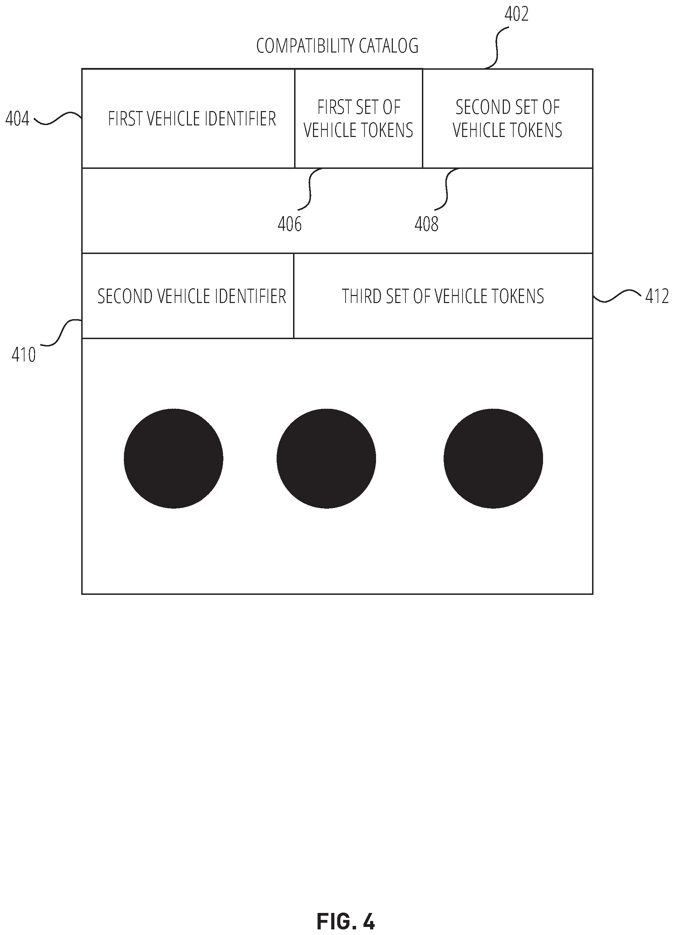

The listing augmentation system 210 implements several innovative approaches to handle different use cases and maintain data consistency. For instance, when dealing with regional variations in vehicle specifications, the compatibility catalog 402 of FIG. 4 can maintain different vehicle identifiers for the same vehicle model in different markets, such as a BMW 3 Series in the US versus Germany, while establishing relationships between these identifiers to enable cross-market compatibility. Another example is how the listing augmentation system 210 handles part-specific compatibility requirements, such as for windshield wipers, the system might extract only year, make, and model tokens, while for a truck bed cover, it might focus on bed length and type. Another example demonstrates the system's ability to handle naming convention changes, such as when a vehicle engine previously classified as "electric" is updated to "BATTERY EV (EV/BEV)" in the standards catalog, the compatibility catalog 402 (which can include the notional profile service) maintains the relationship between these different token values through versioning, allowing all listings to be automatically updated without modifying each listing individually.

The notional profile service can maintain relationships between vehicle tokens and handles versioning when updates occur, while the compatibility catalog's architecture helps solve the "deep copy" problem by associating notional profile group identifiers with vehicle parts. When monthly updates from standards bodies modify vehicle specifications, the system only needs to update the token information in the notional profile service, and all listings referencing those identifiers through the compatibility catalog will automatically reflect the latest information. This design significantly improves system efficiency and ensures consistency across the marketplace, as demonstrated by the Tesla Model S example where all seven trim variants (70D, 70, 85D, 85, 90D, P85D, and P90D) can be managed through a single grouping identifier that maps to individual vehicle identifiers, each with their respective token sets maintained by the notional profile service.

Specifically, the compatibility catalog's architecture in combination with the notional profile service solves the "deep copy" problem by assigning unique identifiers to sets of vehicle tokens and maintaining versions of these identifiers when updates occur. This approach eliminates the need to update identifiers in all listings when vehicle token information changes. For example, when monthly updates from standards bodies modify vehicle specifications, the listing augmentation system 210 only needs to update the token information associated with the relevant identifiers in the compatibility catalog, and all listings referencing those identifiers will automatically reflect the latest information.

The listing augmentation system 210 may also include an item compatibility service 226 that stores grouping IDs and compatibility catalog product IDs. This service can be updated when new products are added, or existing products are modified. For example, the item compatibility service 226 serves as a component within the listing augmentation system 210, functioning as a centralized repository that stores and manages the relationships between vehicle parts and compatible vehicles. This service maintains two key types of identifiers: grouping IDs and compatibility catalog product IDs, which together create an efficient abstraction layer that enables seamless updates to vehicle compatibility information across multiple listings.

The item compatibility service 226 can be updated through several mechanisms, providing flexibility and responsiveness to changes in the vehicle parts ecosystem. For example, when a new brake pad product is introduced to the marketplace, the item compatibility service 226 can be updated to store a new grouping ID that associates this product with all compatible vehicle identifiers. This allows the listing augmentation system 210 to automatically enhance any new listings for this product with comprehensive fitment information without requiring sellers to manually identify all compatible vehicles.

Another example involves product modifications that affect compatibility. When a manufacturer updates a vehicle part to be compatible with additional vehicle models, the item compatibility service 226 can be updated to modify the existing grouping ID to include additional vehicle identifiers. For instance, if a Tesla Model S brake pad that was previously compatible with only the 70D and 85D trims is modified to also fit the P90D trim, the grouping ID in the item compatibility service can be updated to include the vehicle identifier for the P90D trim. This update automatically propagates to all listings referencing that grouping ID, ensuring that buyers with P90D models can now find these compatible parts.

A third example demonstrates how the item compatibility service 226 handles regional variations in vehicle specifications. The service can store different grouping IDs for the same product in different markets, such as separate grouping IDs for a BMW 3 Series part in the US versus Germany. When a seller lists this part in multiple marketplaces, the item compatibility service 226 ensures that the appropriate grouping ID is associated with each listing based on the marketplace, allowing buyers in each region to see the correct vehicle compatibility information using their local vehicle naming conventions and specifications.

The item compatibility service 226 plays a role in the system's ability to maintain accurate and up-to-date vehicle fitment information across millions of listings without requiring manual updates to each individual listing. By storing and managing these relationships between products and vehicle groupings, it enables the system to efficiently handle changes to vehicle specifications, product compatibility, and regional variations while ensuring that buyers can easily find parts that are compatible with their specific vehicles.

In some examples, the item compatibility service 226 performs several operations to update a listing using a sophisticated sequence of queries and data transformations. When a listing needs to be updated with enhanced vehicle fitment information, the item compatibility service 226 executes a multi-step process that leverages the compatibility catalog to retrieve and apply the appropriate vehicle tokens. First, the item compatibility service 226 receives an enhance event from the listing filtering component 216, which triggers the listing update process. Upon receiving this event, the service queries the compatibility catalog system 206 using the vehicle identifier present in the listing. This initial query searches for the vehicle part in the compatibility catalog to retrieve the set of vehicle tokens associated with the vehicle identifier. For example, if a listing for Tesla Model S brake pads contains a vehicle identifier for the 70D trim, the item compatibility service 226 will query the compatibility catalog system 206 to find all relevant vehicle tokens (year, make, model, trim, and engine information) associated with that identifier.

Next, the item compatibility service 226 performs a more complex query to retrieve a vehicle grouping identifier that corresponds to the vehicle part. This query searches the database to find the first vehicle grouping identifier that matches the brand and MPN of the vehicle part in the listing. For instance, if the listing is for Detroit Axle brake rotors with a specific MPN, the system will retrieve the grouping ID that encompasses all compatible Tesla Model S variants. Once the grouping ID is identified, the item compatibility service 226 executes another query to retrieve all vehicle identifiers associated with that grouping ID. This operation effectively expands the compatibility information beyond what was originally in the listing.

Finally, the item compatibility service 226 retrieves the complete set of vehicle tokens associated with each vehicle identifier in the group and applies them to the listing. During this process, the service may perform additional filtering based on part type or geographical location. For example, when updating a brake pad listing, the system might extract all token fields (year, make, model, trim, and engine), whereas for windshield wipers, it might only extract year, make, and model tokens. After retrieving and processing all relevant vehicle tokens, the service automatically updates the vehicle fitment information in the listing by sending the enhanced data to the Selling API, which revises the listing with the comprehensive set of compatible vehicles. This can be seen in the example of the Tesla Model S brake rotors listing, where all seven trim variants (70D, 70, 85D, 85, 90D, P85D, and P90D) are included in the compatibility table, providing buyers with complete fitment information.

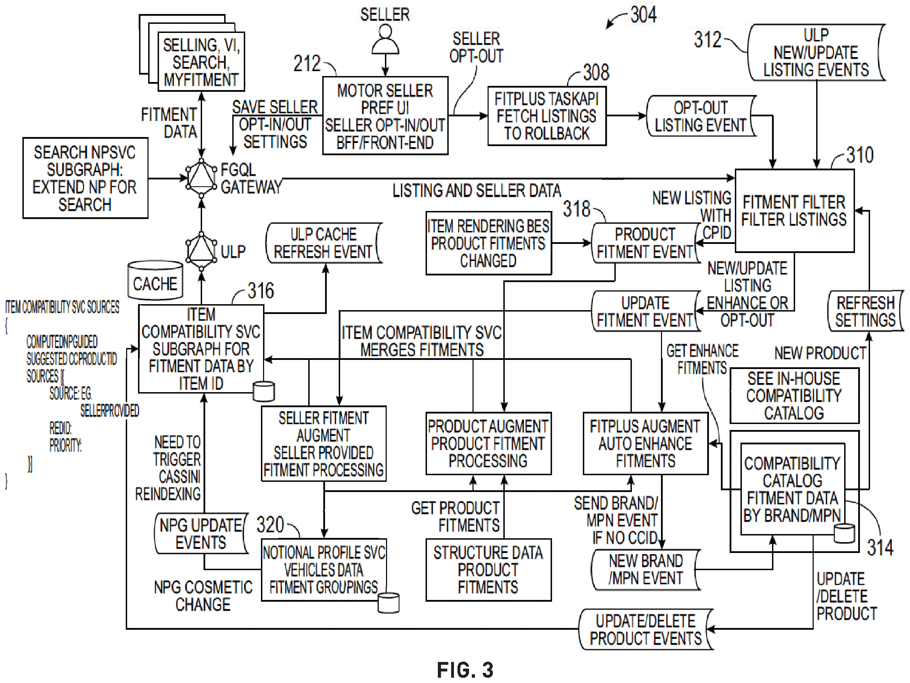

The compatibility catalog system can be leveraged for various non-listing based applications beyond its primary use in enhancing marketplace listings. For example, as discussed below in connection with FIG. 3, the system creates a separate database that can be used for other purposes and exposes the information differently through a subgraph architecture, enabling broader applications of the vehicle compatibility data. One significant non-listing application is the ability to power vehicle-specific search experiences across different platforms. By leveraging the GraphQL Gateway and subgraph architecture, the system can extend the notional profile for search purposes through the SearchNPSvc component. This allows buyers to search for compatible parts using their specific vehicle information without requiring direct interaction with listings. For example, a mobile application could implement a "garage" feature where users save their vehicles and receive personalized part recommendations based on the compatibility data stored in the catalog. The system's ability to handle different vehicle naming conventions across regions makes this particularly valuable for global applications where the same vehicle may be described differently in different markets.

Another non-listing use case involves providing compatibility data through APIs to third-party applications and services. The compatibility catalog's structured approach to storing vehicle fitment data makes it an ideal source for external systems that need reliable vehicle compatibility information. For instance, automotive repair shops could integrate with this system to quickly identify compatible replacement parts for vehicles being serviced, or manufacturers could use the data to understand which vehicles their products are compatible with across different markets. The system's ability to maintain historical versions of vehicle tokens through the notional profile service ensures that even as vehicle specifications change over time, applications can still access accurate compatibility information for older vehicle models.

In some cases, the same compatibility catalog 402 of FIG. 4 that powers listing enhancements also serves as a valuable data source for third-party applications through API integration. This highlights the versatility of the centralized compatibility database architecture. When a third-party application sends an API request for vehicle compatibility data, the system executes a multi-step process through the Application Program Interface (API) server 120 of FIG. 1. The request is received and authenticated, then routed to the application server 118 of FIG. 1, which hosts the vehicle parts management platform 102 of FIG. 1. The platform processes the request by accessing the compatibility catalog 402 through the data access service 136 of FIG. 1.

For example, when an automotive repair shop's system needs to identify compatible brake pads for a customer's vehicle, the API receives a request containing a vehicle identifier (such as "2016 Tesla Model S 70D"). The system searches the compatibility catalog 402 using this identifier to locate the corresponding vehicle tokens (year, make, model, trim, engine information). The compatibility catalog system 206 of FIG. 2 then retrieves the vehicle grouping identifier associated with brake pads that fit this vehicle. Using this grouping ID, the compatibility catalog system 206 queries the database to retrieve all compatible part information. The compatibility catalog system 206 then transforms the retrieved data into a structured API response. For each compatible part, the compatibility catalog system 206 assembles relevant information including brand, MPN, and compatibility notes. The response includes all vehicle tokens associated with each part, allowing the repair shop to verify exact fitment specifications. The compatibility catalog system 206 may filter the response based on geographical location or part type parameters included in the API request.

This entire process can utilize the same compatibility catalog 402 and notional profile service 230 of FIG. 2 that power the listing enhancement functionality. The system's architecture allows it to serve both internal listing enhancement operations and external API requests without duplicating data or infrastructure. This unified approach ensures consistency across all applications of the compatibility data and allows updates to propagate immediately to both listings and API responses. For instance, when a manufacturer updates a part to be compatible with additional vehicle models, both the marketplace listings and the repair shop's system accessing the data via API will simultaneously reflect this change, maintaining data consistency across all platforms.

In some implementations, the system includes an admin UI component 228 of FIG. 2 that allows administrators to manage the compatibility catalog 402. When admins make changes to fitment data, the system can trigger the refresh listing component 220 to refresh events to update affected listings.

The listing augmentation system 210 of FIG. 2 may also include a rollback component 228 implemented as a Fitplus Task API that can fetch listings to roll back when sellers opt out of automatic enhancement. This ensures that sellers maintain control over their listing data. When product update or delete events occur, these are processed by the system to ensure that all related listings are updated accordingly. This maintains consistency between the compatibility catalog and the listings on the marketplace. In some examples, the system interfaces with a search data feeder that sends updated fitment information to a search indexing system to ensure that search results reflect the latest compatibility data.

For example, the rollback component 228 of the listing augmentation system 210 implements a comprehensive set of technical operations to handle seller opt-out scenarios and maintain consistency between the compatibility catalog and marketplace listings. When a seller decides to opt out of automatic enhancement, first, the rollback process begins when a seller changes their opt-in/opt-out preference through the motor seller preference UI, which triggers an opt-out event that is sent to the Fitplus Task API (rollback component 228). Upon receiving this event, the rollback component 228 queries the database to identify all listings associated with the seller that have been previously enhanced by the system. This query operation retrieves a comprehensive list of listings that need to be reverted to their original state before any automatic enhancements were applied. For each identified listing, the rollback component 228 performs a detailed retrieval operation to fetch the original fitment information that existed before enhancement. This is accomplished by accessing historical fitment data that the system maintains for each enhanced listing. For example, if a Tesla Model S brake pad listing was originally created with compatibility for only the 70D trim but was later enhanced to include all seven trim variants (70D, 70, 85D, 85, 90D, P85D, and P90D), the system retrieves the original fitment information showing only the 70D trim compatibility.

The rollback component 228 then executes a series of API calls to the Selling API to revise each listing, removing the automatically added vehicle fitments while preserving any seller-provided fitment information. This ensures that sellers maintain complete control over their listing data while preventing any automatic modifications from persisting after opt-out. For instance, if a seller had manually added compatibility for a 2016 Tesla Model S 70D and the system had automatically enhanced it with six additional trim variants, the rollback operation would remove those six additional variants while preserving the seller's original 70D compatibility information.

When product update or delete events occur, the system performs a different set of operations to maintain data consistency. The compatibility catalog system 206 receives these events and triggers a refresh listings signal to the listing filtering component 216. The system then computes which listings are affected by the catalog change by searching for all listings associated with the updated or deleted product. For example, if a manufacturer updates a brake pad's compatibility to remove support for a specific vehicle trim, the system identifies all listings for that brake pad and sends clean events to update those listings accordingly. This ensures that buyers receive accurate compatibility information and prevents potential mismatches between actual product compatibility and what's displayed in listings.

The system architecture allows for efficient processing of listing updates by separating the compatibility catalog from the listing data. This separation enables the system to maintain a single source of truth for vehicle fitment data while allowing multiple listings to reference this data. When a listing is enhanced, the system may add additional vehicle tokens that are compatible with the part being sold. This enhancement can improve the discoverability of listings and increase conversion rates. Similarly, when cleaning is required due to changes in vehicle token naming conventions, the system can automatically update all affected listings to maintain consistency across the marketplace.

The system can handle various vehicle token types, including year, make, model, trim, and engine information. These tokens are used to precisely define which vehicles are compatible with specific parts. When a seller opts out of automatic enhancement, the system can trigger a rollback process that reverts listings to their original state. This ensures that sellers maintain control over their listing content. The system may generate status events that track changes made to vehicle fitment information. These events can be used for monitoring, reporting, and auditing purposes.

FIG. 3 is a diagram 304 of another implementation of the vehicle parts management platform 102, in accordance with some examples. This diagram 304 depicts a more sophisticated architecture that builds upon the foundation shown in diagram 204 of FIG. 2, with significant enhancements to data management and service integration.

The diagram 304 shows a comprehensive system that includes multiple interconnected components organized around a central data management approach. A listing event update component 312 (e.g., the Unified Listing Platform [ULP] component) can generate new and update listing events, similar to the operations discussed in diagram 204 but with enhanced integration capabilities. These events flow into a listing filtering component 310 that determines which listings should be processed based on various criteria including seller preferences and marketplace settings.

In this implementation, the system introduces a seller opt-out event path that allows sellers to remove their listings from automatic enhancement. When a seller opts out through the motor seller preference UI, an opt-out listing event is generated and sent to the Fitplus Task API (rollback component 308), which fetches listings that need to be rolled back to their original state. This ensures that sellers maintain complete control over their listing data and can choose whether to participate in the automatic enhancement system.

A key in this phase is the introduction of a subgraph architecture for data management. The system includes a fitment database 316 that extends the notional profile for search functionality, allowing the search system to directly leverage the vehicle compatibility data. This component interfaces with the FGQL (Federated GraphQL) Gateway, which serves as a central access point for various services to retrieve fitment data. The fitment database 316 (e.g., item compatibility service) plays a central role in this architecture, storing important information including computed notional profile grouping IDs, suggested compatibility catalog product IDs, and source information for fitments. This service merges fitment data from multiple sources, creating a unified view of compatibility information that can be accessed by other components in the system. The service stores this information in a structured format that includes the source of the fitment data (e.g., seller-provided), the notional profile grouping ID, and priority information to resolve conflicts when multiple sources provide different compatibility data for the same part.

The system implements a sophisticated event-driven architecture where product fitment events 318 trigger updates across the platform. When product fitments change, the item reindexing BES component generates events that propagate through the system, ensuring that all affected listings are updated accordingly. This approach allows for efficient processing of changes and maintains eventual consistency across the marketplace.

In some examples, the system shown in FIG. 3 creates a separate database specifically for fitment information. This separation allows the system to manage fitment data independently from listing data, enabling more efficient updates and reducing the need to modify individual listings when compatibility information changes. The system can expose this information through the subgraph architecture, making it available to various components without duplicating the data.

The diagram 304 shows three primary augmentation services that process different types of fitment information including SellerFitmentAugment for seller-provided fitments, ProductAugment for product fitment processing, and FitplusAugment for auto-enhanced fitments. These services work together to create a comprehensive set of compatibility information for each listing, drawing from multiple sources to ensure accuracy and completeness.

The fitment compatibility database 314 (e.g., the compatibility catalog) continues to serve as a repository for fitment data organized by brand and MPN but can interface more directly with the fitment grouping database 320 (e.g., the notional profile grouping service which holds a list of notional profiles and notes), which stores vehicle data and fitment groupings. The notional profile service maintains the relationships between vehicle identifiers and their associated tokens, allowing the system to efficiently update compatibility information when vehicle specifications change.

In some cases, the use of notional profile IDs directly for indexing and data retrieval, rather than relying on textual vehicle tokens enhances capabilities of the system. This approach allows the system to maintain a single source of truth for vehicle information and efficiently propagate changes throughout the platform. When a vehicle specification changes (such as an engine type being reclassified from "electric" to "BATTERY EV"), the system only needs to update the information associated with the relevant notional profile ID, and all listings referencing that ID will automatically reflect the change.

The system includes mechanisms for handling NPG (Notional Profile Grouping) updates and cosmetic changes to vehicle specifications. When a cosmetic change occurs, such as a rename of a vehicle token, the system can propagate this change without requiring updates to individual listings. This is possible because listings reference the notional profile IDs rather than the actual token values, creating an abstraction layer that isolates listings from changes in vehicle terminology.

The system can also handle new brand/MPN events when no compatibility catalog ID exists for a particular product. In such cases, the system can generate events to create new entries in the compatibility catalog, ensuring that all products can be properly categorized and associated with compatible vehicles. This capability allows the system to continuously expand its knowledge base as new products are introduced to the marketplace.

For product fitment processing, the system includes a Structure Data component that organizes product fitments in a standardized format. This structured approach ensures consistency across the platform and facilitates efficient searching and matching of compatible parts. When product fitments are updated or deleted, the system generates events that trigger updates to all affected listings, maintaining consistency between the compatibility catalog and the marketplace.

The system implements a cache mechanism to improve performance, with ULP cache refresh events triggering updates when necessary. This caching approach reduces the load on backend systems and improves response times for users searching for compatible parts. When a product's fitments change, the cache is updated to reflect the new compatibility information, ensuring that users always see the most current data.

In this advanced implementation, the system leverages the relationships between notional profiles to enable cross-market compatibility. For example, a BMW 3 Series in Germany and a BMW 3 Series in the UK may have different sets of tokens due to regional variations in vehicle specifications, but the system can establish relationships between these profiles to enable parts compatibility across markets. This capability is particularly valuable for sellers who operate in multiple regions and need to maintain valid fitment information across different marketplaces.

The system also supports different levels of token specificity based on part type. For example, windshield wipers might only require year, make, and model information, while brake pads might need more detailed specifications including trim and engine type. The system can extract the appropriate subset of tokens from the vehicle ID based on the part type, ensuring that compatibility information is both accurate and appropriately detailed for each specific application.

The integration with the search system through the fitment grouping database 320 allows buyers to find compatible parts more efficiently. By extending the notional profile for search, the system enables buyers to search for parts based on their specific vehicle, with the search results automatically filtered to show only compatible items. This integration improves the shopping experience by reducing the likelihood of purchasing incompatible parts.

In some implementations of the automated vehicle parts fitment management system, listings may include a vehicle identifier rather than static vehicle tokens. This approach represents a significant advancement in the system's architecture. When a listing includes a vehicle identifier instead of static tokens, the system operates through a dynamic retrieval process. When a user accesses the listing, the system automatically queries the compatibility catalog 402 (shown in FIG. 4) using the vehicle identifier to retrieve the corresponding set of vehicle tokens. These tokens are then presented in the listing interface, providing the user with up-to-date vehicle compatibility information without requiring the listing itself to store this data.

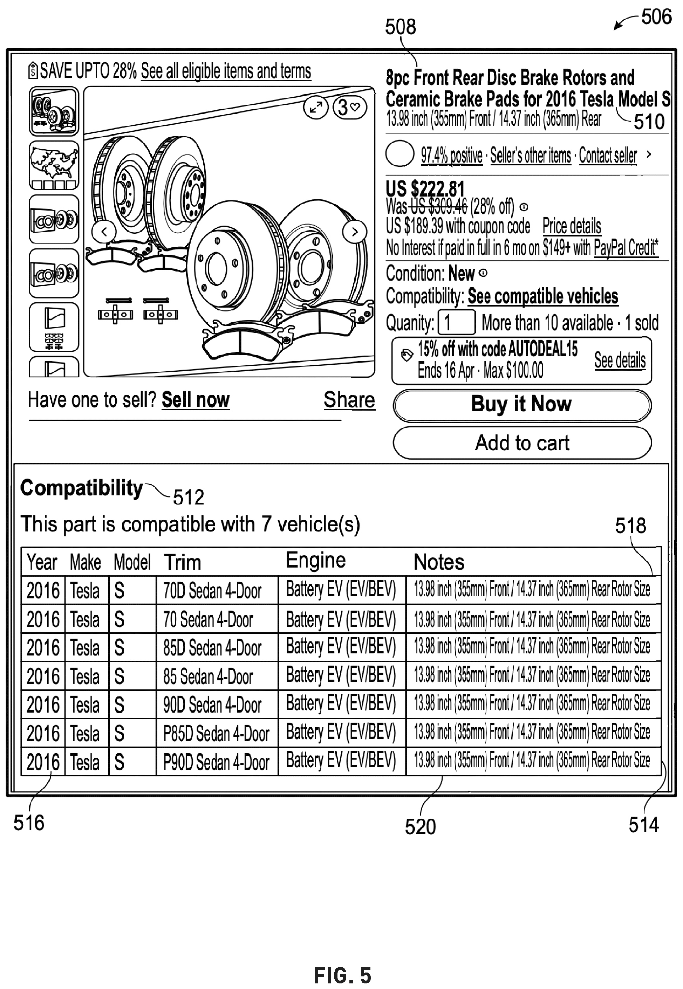

This approach offers substantial efficiency improvements over traditional methods that embed static tokens directly in listings. By using vehicle identifiers as references to the compatibility catalog, the system can maintain a single source of truth for vehicle fitment data. When vehicle specifications change, such as when an engine type designation changes from "electric" to "BATTERY EV (EV/BEV)" as shown in the Tesla Model S example in FIG. 5, the system only needs to update the token information in the compatibility catalog once.

Without this reference-based approach, updating vehicle specifications would require modifying each individual listing that contains the outdated information, such as potentially millions of listings across the marketplace. This would be computationally expensive, time-consuming, and prone to inconsistencies. Instead, by having listings reference vehicle identifiers that point to the compatibility catalog, all listings automatically reflect the latest vehicle specifications whenever they are accessed.

The system further enhances efficiency through the use of notional profile grouping IDs that associate sets of vehicle identifiers with specific parts. This creates an additional layer of abstraction that allows the system to efficiently manage compatibility relationships at scale. When a product's compatibility changes, the system can simply update the grouping definition rather than modifying individual listings. For example, if a brake pad manufacturer expands compatibility to include additional vehicle models, the system can update the grouping ID to include additional vehicle identifiers and/or vehicle tokens, and all listings referencing that grouping ID will automatically reflect the expanded compatibility.

This identifier-based approach also enables the system to handle regional variations and part-specific requirements more efficiently. The same vehicle may have different specifications in different markets, and different parts may require different levels of specificity in their compatibility information. By using vehicle identifiers that reference the compatibility catalog, the system can dynamically retrieve the appropriate set of tokens based on the context in which the listing is being viewed, ensuring that users always see relevant and accurate compatibility information.

FIG. 4 is a diagram of an illustrative compatibility catalog 402, in accordance with some examples. The compatibility catalog 402 serves as the central data repository for the vehicle parts management platform 102 of FIG. 1. This compatibility catalog 402 maintains vehicle fitment data separately from listing data, enabling efficient management of vehicle compatibility information across multiple listings. The vehicle parts management platform 102 leverages this catalog to enhance listings with comprehensive and accurate vehicle compatibility information.

The compatibility catalog 402 is structured as a database that associates vehicle identifiers with sets of vehicle tokens. As shown in FIG. 4, the catalog includes a first vehicle identifier 404 that is associated with both a first set of vehicle tokens 406 and a second set of vehicle tokens 408. Similarly, a second vehicle identifier 410 is associated with a third set of vehicle tokens 412. This structure allows the system to maintain multiple token sets for each vehicle identifier, accommodating different naming conventions or specifications for the same vehicle.

When the vehicle parts management platform 102 receives a request to enhance a listing for brake pads, it may perform several operations using the compatibility catalog 402. The platform first accesses the listing to identify any existing vehicle identifiers. For each vehicle identifier (such as first vehicle identifier 404) in the listing, the vehicle parts management platform 102 queries the compatibility catalog 402 to retrieve the associated vehicle tokens (first set of vehicle tokens 406 and second set of vehicle tokens 408). The vehicle parts management platform 102 then searches for a vehicle grouping identifier that corresponds to the brake pads in the listing. Using this grouping identifier, the platform retrieves all vehicle identifiers (including second vehicle identifier 410) associated with compatible vehicles. For each compatible vehicle identifier, the platform retrieves the corresponding token sets (including third set of vehicle tokens 412). Finally, the vehicle parts management platform 102 enhances the listing by adding all retrieved vehicle tokens, significantly expanding the compatibility information available to potential buyers.

When vehicle token naming conventions change (such as "electric" being updated to "BATTERY EV"), the vehicle parts management platform 102 may identify all affected vehicle identifiers in the compatibility catalog 402 that contain the outdated token. For each affected vehicle identifier (such as first vehicle identifier 404), the platform updates the associated token sets (first set of vehicle tokens 406 and second set of vehicle tokens 408). The platform then identifies all listings that reference these vehicle identifiers. For each affected listing, the platform generates a clean event to update the vehicle fitment information with the new naming convention. This operation ensures consistency across all listings without requiring manual updates to each individual listing.

For parts that are sold in multiple markets, the vehicle parts management platform 102 may maintain different vehicle identifiers (such as first vehicle identifier 404 and second vehicle identifier 410) for the same vehicle model in different markets. Each vehicle identifier may be associated with market-specific token sets (such as first set of vehicle tokens 406 for the US market and third set of vehicle tokens 412 for the European market). The vehicle parts management platform 102 establishes relationships between these vehicle identifiers in the compatibility catalog 402. When a seller lists a part in multiple marketplaces, the platform can retrieve the appropriate vehicle tokens for each market, ensuring that buyers see compatibility information in their local format.

Different vehicle parts may require different levels of specificity in their compatibility information. The vehicle parts management platform 102 may determine the part type from the listing (e.g., windshield wipers vs. brake pads) and query the compatibility catalog 402 to retrieve all relevant vehicle identifiers and their associated token sets. Based on the part type, the platform may select which subsets of tokens to extract from each token set. For windshield wipers, the platform might extract only year, make, and model tokens from the first set of vehicle tokens 406. For brake pads, the platform might extract all tokens including trim and engine information from the same token set. This selective extraction ensures that compatibility information is appropriately detailed for each specific part type.

The compatibility catalog 402 thus serves as the foundation of the vehicle parts management platform 102, enabling sophisticated management of vehicle compatibility information that significantly improves the accuracy and completeness of fitment data across the marketplace.

FIG. 5 illustrates example inputs and outputs of the vehicle parts management platform 102 of FIG. 1, in accordance with some examples.

The user interface 506 of FIG. 5 displays a vehicle part listing with enhanced fitment information. This user interface 506 demonstrates how the automated vehicle parts fitment management system and vehicle parts management platform 102 of FIG. 1 presents compatibility information to users in a practical e-commerce context. The user interface 506 includes a listing title 508 for a product, such as "8pc Front Rear Disc Brake Rotors and Ceramic Brake Pads for 2016 Tesla Model S" with specific sizing information "13.98 inch (355mm) Front / 14.37 inch (365mm) Rear," which can include the vehicle identifier 510.

The user interface 506 includes fitment information 512 providing the vehicle fitment information retrieved from the compatibility catalog 402 of FIG. 4. The fitment information 512 is presented in a structured table (first set of vehicle tokens 518) that displays detailed vehicle tokens for each compatible vehicle. The table includes columns for Year, Make, Model, Trim, Engine, and Notes, providing comprehensive fitment information for potential buyers. This structured presentation allows users to easily determine whether the part is compatible with their specific vehicle.

The second set of vehicle tokens 514 in the compatibility table includes information for one of the Tesla Model S variants. The first vehicle token 516 indicates the Year "2016," while the second vehicle token 520 points to the Make "Tesla."

The compatibility table demonstrates the system's ability to present multiple vehicle configurations (seven different Tesla Model S trim variants: 70D, 70, 85D, 85, 90D, P85D, and P90D) that are all compatible with the same part. Each row contains the complete set of vehicle tokens needed to precisely identify a compatible vehicle, including the updated engine designation "BATTERY EV (EV/BEV)" which reflects the current naming convention maintained in the compatibility catalog.

This interface exemplifies how the vehicle parts management platform 102 enhances listings with comprehensive compatibility information, improving the shopping experience by clearly showing which specific vehicle configurations are compatible with the part being sold. The presentation of detailed fitment information can lead to increased conversion rates by helping buyers confidently determine whether the part will fit their specific vehicle.

In some examples, the vehicle parts management platform 102 performs a series of technical operations to generate the vehicle tokens presented in the fitment information 512 of the user interface 506, shown in FIG. 5. When a user accesses a listing containing a vehicle part, the vehicle parts management platform 102 initiates the token generation process. First, the vehicle parts management platform 102 accesses the listing to identify the vehicle part and any existing vehicle identifiers associated with it. For the brake rotors listing shown in FIG. 5, the platform identifies that this is a part for a 2016 Tesla Model S with specific dimensions (13.98 inch front/14.37 inch rear) using the vehicle identifier 510. Next, the vehicle parts management platform 102 searches the compatibility catalog 402 based on the vehicle identifier 510. This search operation queries the compatibility catalog 402 to retrieve the set of vehicle tokens associated with the vehicle identifier 510. For example, when searching for the first vehicle identifier 404 of FIG. 4 in the compatibility catalog 402, the system retrieves both the first set of vehicle tokens 406 and second set of vehicle tokens 408 associated with that identifier.

The vehicle parts management platform 102 then performs a more complex query to retrieve a vehicle grouping identifier that corresponds to the specific brake rotors. This operation searches the database to find the grouping ID that encompasses all compatible Tesla Model S variants. Once the grouping ID is identified, the system executes another query to retrieve all vehicle identifiers (including second vehicle identifier 410 of FIG. 4) associated with that grouping ID, effectively expanding the compatibility information beyond what was originally in the listing. For each retrieved vehicle identifier, the platform accesses the compatibility catalog 402 to obtain the complete set of vehicle tokens. In the case of the Tesla Model S brake rotors shown in FIG. 5, this includes retrieving tokens for all seven trim variants (70D, 70, 85D, 85, 90D, P85D, and P90D) that are displayed in the first set of vehicle tokens 518.

The vehicle parts management platform 102 may perform selective token extraction based on the part type. Since brake rotors require comprehensive vehicle specifications, the system retrieves all token fields (year, make, model, trim, and engine) for each compatible vehicle. This is evident in the first set of vehicle tokens 518 where each row contains the complete set of vehicle tokens: first vehicle token 516 (Year "2016"), second vehicle token 520 (Make "Tesla"), Model "S", various Trim options, and Engine "BATTERY EV (EV/BEV)." Finally, the vehicle parts management platform 102 automatically updates the vehicle fitment information in the listing by sending the enhanced data to the user interface 506. This operation populates the fitment information 512 with the comprehensive set of compatible vehicles, presenting them in a structured table (or structured summarization, such as Year: 2011-2014 Make: Ford Model: F150, F350) that clearly shows which specific vehicle configurations are compatible with the part being sold.

In some cases, the compatibility table can display vehicle tokens in both discrete and summarized formats. While individual vehicle configurations are shown with specific tokens (like "2016 Tesla Model S 70D Sedan 4-Door"), the system also supports structured summarization of compatible vehicles (such as "2011-2014 Ford F-150, F-350") to efficiently represent ranges of compatible vehicles. This flexible token representation allows the system to present fitment information in the most appropriate format based on the part type and compatibility patterns.

This entire process leverages the data structure of the compatibility catalog 402, which maintains vehicle fitment data separately from listing data. This separation enables the system to efficiently update compatibility information across multiple listings without requiring individual modifications to each listing when vehicle specifications change.

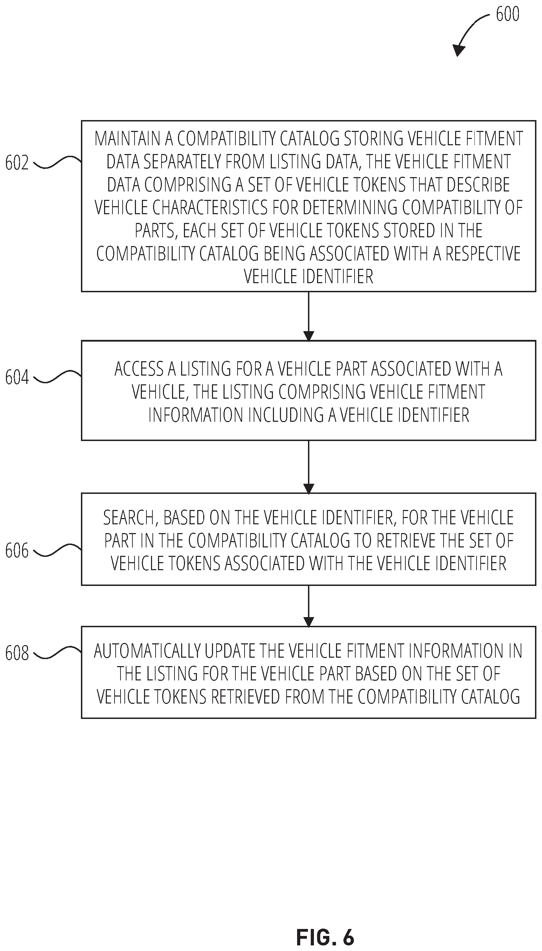

FIG. 6 illustrates a routine 600 (e.g., method or process) in accordance with some examples. The operations discussed in connection with FIG. 6 can be performed sequentially, in parallel, and in any suitable order. Consistent with some examples, the operations discussed in FIG. 6 can be performed by the vehicle parts management platform 102.

In operation 602, the vehicle parts management platform 102 maintains a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier. This operation involves creating and maintaining a structured database (compatibility catalog 402 of FIG. 4) that associates vehicle identifiers with sets of vehicle tokens. The vehicle parts management platform 102 may store multiple token sets for each vehicle identifier, such as the first set of vehicle tokens 406 of FIG. 4 and second set of vehicle tokens 408 of FIG. 4 associated with the first vehicle identifier 404 of FIG. 4, allowing the system to accommodate different naming conventions or specifications for the same vehicle.

In operation 604, the vehicle parts management platform 102 accesses a listing for a vehicle part associated with a vehicle, the listing comprising vehicle fitment information including a vehicle identifier. During this operation, the vehicle parts management platform 102 retrieves information from a listing, such as the one shown in FIG. 5, which includes product details and existing vehicle compatibility information. The platform identifies the vehicle part (e.g., brake rotors for a Tesla Model S) and any vehicle identifiers already associated with the listing.

The vehicle parts management platform 102 might access various types of vehicle identifiers in listings, each serving different purposes within the automated vehicle parts fitment management system. For example, the vehicle identifier may include a Notional Profile ID representing a specific vehicle configuration, such as "NP-TS2016-70D" for a 2016 Tesla Model S 70D, abstracting the vehicle's characteristics and maintaining relationships with its associated token sets. The vehicle identifier may include a Vehicle Grouping Identifier functioning at a higher level, grouping multiple related vehicle identifiers together, as seen with "VG-TSMS-2016-ALL" which might represent all 2016 Tesla Model S variants (70D, 70, 85D, 85, 90D, P85D, and P90D) shown in FIG. 5. For international compatibility, the vehicle identifier may include Regional Vehicle Identifiers like "EU-BMW3-2016" addressing market-specific needs for vehicles such as a BMW 3 Series in the European market, associating with region-specific token sets that reflect local naming conventions and specifications.

The vehicle identifier may include Part-Specific Vehicle Identifiers tailored to specific part types, such as "WW-FORD-F150-2018" for windshield wipers compatible with a 2018 Ford F-150, which might reference only the subset of vehicle tokens (year, make, model) relevant to that particular part type. To track changes over time, Historical Version Identifiers like "TS-2016-70D-V2" represent a 2016 Tesla Model S 70D after its engine designation was updated from "electric" to "BATTERY EV (EV/BEV)" as displayed in the compatibility table in FIG. 5. The vehicle identifier may include Cross-Market Compatibility Identifiers establishing relationships between vehicle specifications across different markets, with examples like "GLOBAL-BMW3-320i-2016" linking equivalent BMW 3 Series models sold under different specifications in various countries, enabling seamless compatibility information across international marketplaces.

In operation 606, the vehicle parts management platform 102 searches, based on the vehicle identifier, for the vehicle part in the compatibility catalog to retrieve the set of vehicle tokens associated with the vehicle identifier. This search operation queries the compatibility catalog 402 to find matching vehicle identifiers and their associated token sets. For example, when searching for the first vehicle identifier 404, the system retrieves both the first set of vehicle tokens 406 and second set of vehicle tokens 408. The platform may also search for a vehicle grouping identifier that corresponds to the specific part, allowing it to retrieve all compatible vehicle identifiers and their associated token sets.

In operation 608, the vehicle parts management platform 102 automatically updates the vehicle fitment information in the listing for the vehicle part based on the set of vehicle tokens retrieved from the compatibility catalog. This operation enhances the listing by adding comprehensive vehicle compatibility information, as shown in the fitment information 512 of FIG. 5. The platform populates the fitment information 512 (including the compatibility table) of FIG. 5 with detailed vehicle tokens for each compatible vehicle, including year, make, model, trim, and engine information. For example, a listing for Tesla Model S brake rotors might be enhanced to include all seven trim variants (70D, 70, 85D, 85, 90D, P85D, and P90D) as shown in FIG. 5, significantly expanding the compatibility information available to potential buyers.

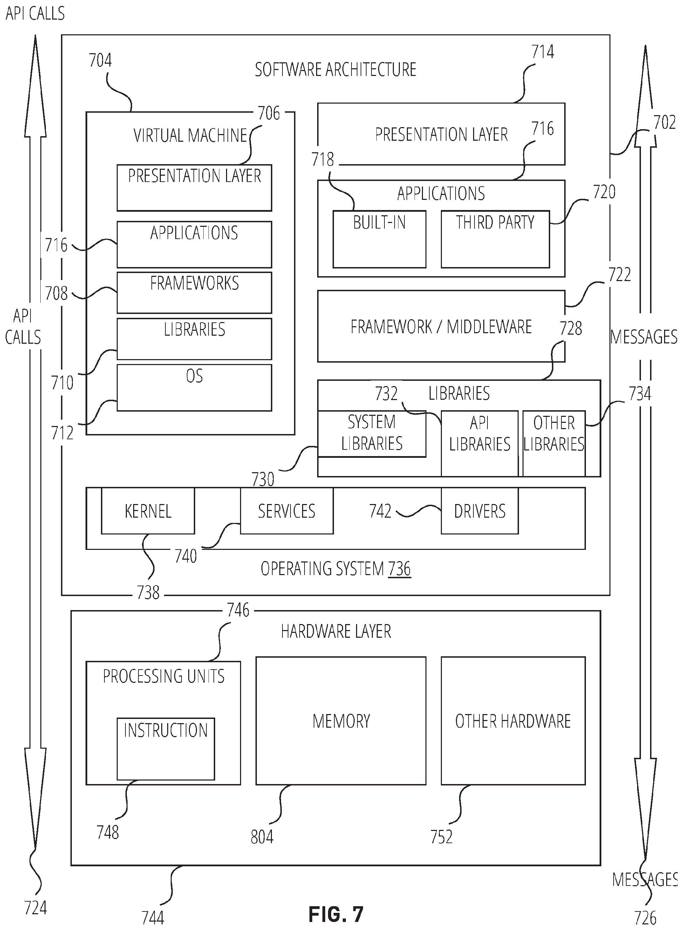

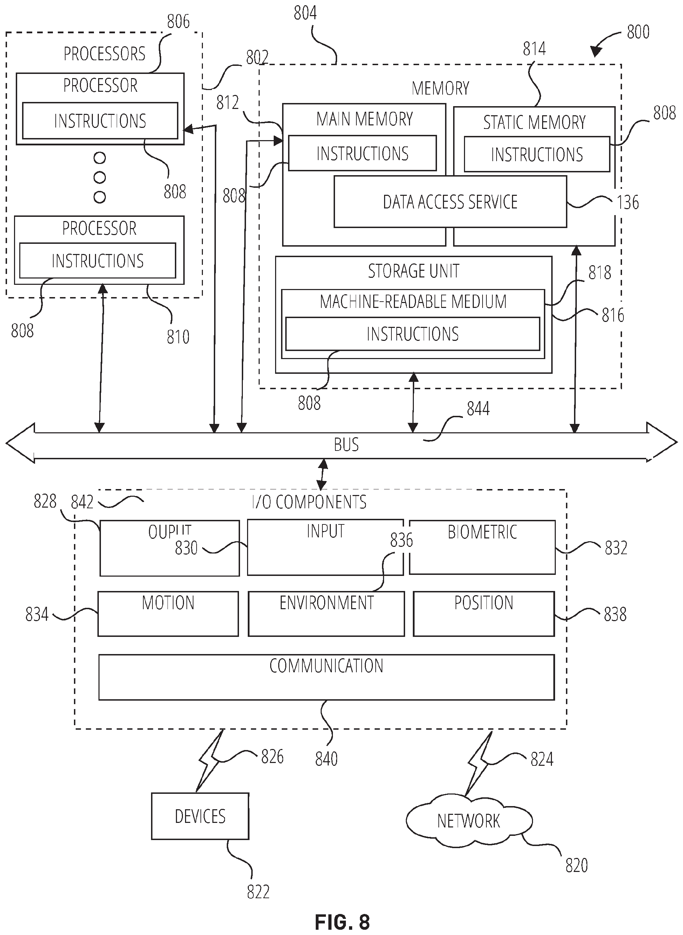

FIG. 7 is a block diagram illustrating an example of a software architecture 702 that may be installed on a machine, according to some examples. FIG. 7 is merely a non-limiting example of a software architecture, and it will be appreciated that many other architectures may be implemented to facilitate the functionality described herein. The software architecture 702 may be executing on hardware such as a machine 800 of FIG. 8 that includes, among other things, processors 810, memory 804, and I/O components 842. A representative hardware layer 744 is illustrated and can represent, for example, the machine 800 of FIG. 8. The representative hardware layer 744 comprises one or more processing units 746 having associated executable instructions 748. The executable instructions 748 represent the executable instructions of the software architecture 702. The hardware layer 744 also includes memory 804, which also have the executable instructions 748. The hardware layer 744 may also comprise other hardware 752, which represents any other hardware of the hardware layer 744, such as the other hardware illustrated as part of the machine 800.

The instructions 748 may be transmitted or received over the network using a transmission medium via a network interface device (e.g., a network interface component included in the communication components 840) and utilizing any one of a number of well-known transfer protocols (e.g., hypertext transfer protocol [HTTP]). Similarly, the instructions 748 may be transmitted or received using a transmission medium via the coupling (e.g., a peer-to-peer coupling) to the devices. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 748 for execution by the machine 800, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

As used herein, the terms "machine-storage medium," "device-storage medium," and "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate arrays (FPGAs), and flash memory devices; magnetic disks such as internal hard disks and removable disks; magneto-optical disks; and CD-ROM and DVD-ROM disks. The terms "machine-storage medium," "computer-storage medium," and "device-storage medium" are non-transitory computer-readable media and specifically exclude carrier waves, modulated data signals, and other such media, at least some of which are covered under the term "signal medium."

In the example architecture of FIG. 7, the software architecture 702 may be conceptualized as a stack of layers, where each layer provides particular functionality. For example, the software architecture 702 may include layers such as an operating system 736, libraries 728, framework / middleware 722, applications 716, and a presentation layer 714. Operationally, the applications 716 or other components within the layers may invoke API calls API calls 724 through the software stack and receive a response, returned values, and so forth (illustrated as messages 726) in response to the API calls 724. The layers illustrated are representative in nature, and not all software architectures have all layers. For example, some mobile or special-purpose operating systems may not provide a framework/middleware 722 layer, while others may provide such a layer. Other software architectures may include additional or different layers.

The operating system 736 may manage hardware resources and provide common services. The operating system 736 may include, for example, a kernel 738, services 740, and drivers 742. The kernel 738 may act as an abstraction layer between the hardware and the other software layers. For example, the kernel 738 may be responsible for memory management, processor management (e.g., scheduling), component management, networking, security settings, and so on. The services 740 may provide other common services for the other software layers. The drivers 742 may be responsible for controlling or interfacing with the underlying hardware. For instance, the drivers 742 may include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 728 may provide a common infrastructure that may be utilized by the applications 716 and/or other components and/or layers. The libraries 728 typically provide functionality that allows other software modules to perform tasks in an easier fashion than by interfacing directly with the underlying operating system 736 functionality (e.g., kernel 738, services 740, or drivers 742). The libraries 728 may include system libraries 730 (e.g., C standard library) that may provide functions such as memory allocation functions, string manipulation functions, mathematic functions, and the like. In addition, the libraries 728 may include API libraries 732 such as media libraries (e.g., libraries to support presentation and manipulation of various media formats such as MPEG4, H.264, MP3, AAC, AMR, JPG, and PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 728 may also include a wide variety of other libraries 734 to provide many other APIs to the applications 716 and other software components/modules.

The frameworks/middleware 722 (also sometimes referred to as middleware) may provide a higher-level common infrastructure that may be utilized by the applications 716 or other software components/modules. For example, the frameworks/middleware 722 may provide various graphical user interface functions, high-level resource management, high-level location services, and so forth. The frameworks/middleware 722 may provide a broad spectrum of other APIs that may be utilized by the applications 716 and/or other software components/modules, some of which may be specific to a particular operating system or platform.

The applications 716 include built-in applications 718 and/or third-party applications 720. Examples of representative built-in applications 718 may include, but are not limited to, a home application, a contacts application, a browser application, a book reader application, a location application, a media application, a messaging application, or a game application.

The third-party applications 720 may include any of the built-in applications 718, as well as a broad assortment of other applications. In a specific example, the third-party applications 720 (e.g., an application developed using the Android^{™} or iOS^{™} software development kit [SDK] by an entity other than the vendor of the particular platform) may be mobile software running on a mobile operating system such as iOS^{™}, Android^{™}, or other mobile operating systems. In this example, the third-party applications 720 may invoke the API calls 724 provided by the mobile operating system such as the operating system 736 to facilitate functionality described herein.

The applications 716 may utilize built-in operating system functions (e.g., kernel 738, services 740, or drivers 742), libraries (e.g., system libraries 730, API libraries 732, and other libraries 734), or framework / middleware 722 to create user interfaces to interact with users of the system. Alternatively, or additionally, in some systems, interactions with a user may occur through a presentation layer, such as the presentation layer 714. In these systems, the application/module "logic" can be separated from the aspects of the application/module that interact with the user.

Some software architectures utilize virtual machines. In the example of FIG. 7, this is illustrated by a virtual machine 704. The virtual machine 704 creates a software environment where applications/modules can execute as if they were executing on a hardware machine (e.g., the machine 800 of FIG. 8). The virtual machine 704 is hosted by a host operating system (e.g., the operating system 736) and typically, although not always, has a virtual machine monitor, which manages the operation of the virtual machine 704 as well as the interface with the host operating system (e.g., the operating system 736). A software architecture executes within the virtual machine 704, such as an operating system 712, libraries 710, frameworks 708, applications 716, or a presentation layer 706. These layers of software architecture executing within the virtual machine 704 can be the same as corresponding layers previously described or may be different.

FIG. 8 is a diagrammatic representation of the machine 800 within which instructions 808 (e.g., software, a program, an application, an applet, an app, or other executable code) for causing the machine 800 to perform any one or more of the methodologies discussed herein may be executed. For example, the instructions 808 may cause the machine 800 to execute any one or more of the methods described herein. The instructions 808 transform the general, non-programmed machine 800 into a particular machine 800 programmed to carry out the described and illustrated functions in the manner described. The machine 800 may operate as a standalone device or may be coupled (e.g., networked) to other machines. In a networked deployment, the machine 800 may operate in the capacity of a server machine or a client machine in a server-client network environment, or as a peer machine in a peer-to-peer (or distributed) network environment. The machine 800 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 808, sequentially or otherwise, that specify actions to be taken by the machine 800. Further, while only a single machine 800 is illustrated, the term "machine" shall also be taken to include a collection of machines that individually or jointly execute the instructions 808 to perform any one or more of the methodologies discussed herein.

The machine 800 may include processors 802, memory 804, and I/O components 842, which may be configured to communicate with each other via a bus 844. In an example, the processors 802 (e.g., a Central Processing Unit [CPU], a Reduced Instruction Set Computing [RISC] processor, a Complex Instruction Set Computing [CISC] processor, a Graphics Processing Unit [GPU], a Digital Signal Processor [DSP], an ASIC, a Radio-Frequency Integrated Circuit [RFIC], another processor, or any suitable combination thereof) may include, for example, a processor 806 and a processor 810 that execute the instructions 808. The term "processor" is intended to include multi-core processors that may comprise two or more independent processors (sometimes referred to as "cores") that may execute instructions contemporaneously. Although FIG. 8 shows multiple processors 802, the machine 800 may include a single processor with a single core, a single processor with multiple cores (e.g., a multi-core processor), multiple processors with a single core, multiple processors with multiples cores, or any combination thereof.

The memory 804 includes a main memory 812, a static memory 814, and a storage unit 816, both accessible to the processors 802 via the bus 844. The main memory 804, the static memory 814, and storage unit 816 store the instructions 808 embodying any one or more of the methodologies or functions described herein. The instructions 808 may also reside, completely or partially, within the main memory 812, within the static memory 814, within machine-readable medium 818 within the storage unit 816, within at least one of the processors 802 (e.g., within the processor's cache memory), or any suitable combination thereof, during execution thereof by the machine 800.

The I/O components 842 may include a wide variety of components to receive input, provide output, produce output, transmit information, exchange information, capture measurements, and so on. The specific I/O components 842 that are included in a particular machine will depend on the type of machine. For example, portable machines such as mobile phones may include a touch input device or other such input mechanisms, while a headless server machine will likely not include such a touch input device. It will be appreciated that the I/O components 842 may include many other components that are not shown in FIG. 8. In various examples, the I/O components 842 may include output components 828 and input components 830. The output components 828 may include visual components (e.g., a display such as a plasma display panel [PDP], a light emitting diode [LED] display, a liquid crystal display [LCD], a projector, or a cathode ray tube [CRT]), acoustic components (e.g., speakers), haptic components (e.g., a vibratory motor, resistance mechanisms), other signal generators, and so forth. The input components 830 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further examples, the I/O components 842 may include biometric components 832, motion components 834, environmental components 836, or position components 838, among a wide array of other components. For example, the biometric components 832 include components to detect expressions (e.g., hand expressions, facial expressions, vocal expressions, body gestures, or eye tracking), measure bio signals (e.g., blood pressure, heart rate, body temperature, perspiration, or brain waves), identify a person (e.g., voice identification, retinal identification, facial identification, fingerprint identification, or electroencephalogram-based identification), and the like. The motion components 834 include acceleration sensor components (e.g., accelerometer), gravitation sensor components, rotation sensor components (e.g., gyroscope), and so forth. The environmental components 836 include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 838 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 842 further include communication components 840 operable to couple the machine 800 to a network 820 or devices 822 via a coupling 824 and a coupling 826, respectively. For example, the communication components 840 may include a network interface component or another suitable device to interface with the network 820. In further examples, the communication components 840 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 822 may be another machine or any of a wide variety of peripheral devices (e.g., a peripheral device coupled via a USB).

Moreover, the communication components 840 may detect identifiers or include components operable to detect identifiers. For example, the communication components 840 may include Radio Frequency Identification (RFID) tag reader components, NFC smart tag detection components, optical reader components (e.g., an optical sensor to detect one-dimensional bar codes such as Universal Product Code [UPC] bar code, multi-dimensional bar codes such as Quick Response [QR] code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 840, such as location via Internet Protocol (IP) geolocation, location via Wi-Fi^{®} signal triangulation, location via detecting an NFC beacon signal that may indicate a particular location, and so forth.

The various memories (e.g., memory 804, main memory 812, static memory 814, and/or memory of the processors 802) and/or storage unit 816 may store one or more sets of instructions and data structures (e.g., software) embodying or used by any one or more of the methodologies or functions described herein. These instructions (e.g., the instructions 808), when executed by processors 802, cause various operations to implement the disclosed examples.

The instructions 808 may be transmitted or received over the network 820, using a transmission medium, via a network interface device (e.g., a network interface component included in the communication components 840) and using any one of a number of well-known transfer protocols (e.g., hypertext transfer protocol [HTTP]). Similarly, the instructions 808 may be transmitted or received using a transmission medium via the coupling 826 (e.g., a peer-to-peer coupling) to the devices 822.

In view of the disclosure above, various examples are set forth below. It should be noted that one or more features of an example, taken in isolation or combination, should be considered within the disclosure of this application.

Example 1. A system comprising: one or more hardware processors; and at least one machine-storage medium for storing instructions that, when executed by the one or more hardware processors, cause the one or more hardware processors to perform operations comprising: maintaining a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier; accessing a listing for a vehicle part associated with a vehicle, the listing comprising vehicle fitment information including a vehicle identifier; searching, based on the vehicle identifier, for the vehicle part in the compatibility catalog to retrieve the set of vehicle tokens associated with the vehicle identifier; and automatically updating the vehicle fitment information in the listing for the vehicle part based on the set of vehicle tokens retrieved from the compatibility catalog and the vehicle fitment data.

Example 2. The system of Example 1, wherein the compatibility catalog includes a notional profile grouping service that stores the set of vehicle tokens, and wherein the operations further comprise: receiving a user opt-in status indicating whether automatic enhancement of vehicle fitment information is enabled for listings associated with the user; and in response to determining that the opt-in status indicates that the automatic enhancement is enabled for the listing, automatically triggering updating the vehicle fitment information in the listing for the vehicle part based on the set of vehicle tokens retrieved from the compatibility catalog.

Example 3. The system of any one of Examples 1-2, wherein the operations further comprise: receiving a user opt-in status indicating whether automatic enhancement of vehicle fitment information is enabled for listings associated with the user; and in response to determining that the opt-in status indicates that the automatic enhancement is disabled for the listing, automatically preventing updating the vehicle fitment information in the listing for the vehicle part based on the set of vehicle tokens retrieved from the compatibility catalog.

Example 4. The system of Example 3, wherein the operations further comprise triggering a rollback of enhanced vehicle fitment information for the listing.

Example 5. The system of any one of Examples 1-4, wherein the operations further comprise: generating fitment status events tracking changes made to vehicle fitment information.

Example 6. The system of any one of Examples 1-5, wherein the set of vehicle tokens comprise year, model, make, and trim information.

Example 7. The system of any one of Examples 1-6, wherein the operations comprise: detecting a status change associated with the listing; and based on the status change, selecting whether to enhance or clean the vehicle fitment information in the listing.

Example 8. The system of Example 7, wherein the operations comprise: detecting, as the status change, a change to a naming convention of an individual vehicle token; determining that the individual vehicle token is included as part of the vehicle fitment information; and automatically cleaning the vehicle fitment information in the listing by updating the naming convention of the individual vehicle token in the listing.

Example 9. The system of any one of Examples 7-8, wherein the operations comprise: detecting, as the status change, that the listing has been updated to include the vehicle fitment information comprising a first group of vehicle tokens; and automatically enhancing the vehicle fitment information in the listing by adding a second group of vehicle tokens to the listing.

Example 10. The system of any one of Examples 1-9, wherein the operations comprise: storing a database comprising the compatibility catalog, the database associating different parts with different vehicle grouping identifiers, each vehicle grouping identifier associated with a set of vehicle identifiers, each vehicle identifier in the set of vehicle identifiers being associated with a respective set of vehicle tokens.

Example 11. The system of Example 10, wherein a first part is associated with a first vehicle grouping identifier, the first vehicle grouping identifier being associated with a first plurality of vehicle identifiers, and wherein the first plurality of vehicle identifiers comprises a first vehicle identifier associated with a first set of vehicle tokens and a second vehicle identifier associated with a second set of vehicle tokens.

Example 12. The system of any one of Examples 10-11, wherein the operations comprise: detecting that the listing comprises the vehicle part; searching the database to retrieve a first vehicle grouping identifier corresponding to the vehicle part; retrieving a first plurality of vehicle identifiers associated with the first vehicle grouping identifier; retrieving a plurality of vehicle tokens associated with the first plurality of vehicle identifiers; and automatically adding the plurality of vehicle tokens associated with the first plurality of vehicle identifiers to the listing.

Example 13. The system of Example 12, wherein the operations comprise: after automatically adding the plurality of vehicle tokens associated with the first plurality of vehicle identifiers to the listing, modifying the first vehicle grouping identifier associated with the vehicle part; and automatically updating the plurality of vehicle tokens associated with the first plurality of vehicle identifiers of the listing to reflect the modified first vehicle grouping identifier.

Example 14. The system of any one of Examples 12-13, wherein the operations comprise: determining a part type for the vehicle part that is in the listing; and selecting which subsets of vehicle tokens to extract from the plurality of vehicle tokens to be added to the listing based on the part type, wherein a first group of vehicle tokens are extracted for a first part type and a second group of vehicle tokens are extracted for a second part type.

Example 15. The system of any one of Examples 12-14, wherein the operations comprise: determining a geographical location associated with the listing; and selecting which subsets of vehicle tokens to extract from the plurality of vehicle tokens to be added to the listing based on the geographical location, wherein a first group of vehicle tokens are extracted for a first geographical location and a second group of vehicle tokens are extracted for a second geographical location.

Example 16. The system of any one of Examples 10-15, wherein the operations comprise: receiving a request for vehicle tokens associated with an individual vehicle part; and searching the database to retrieve a first vehicle grouping identifier corresponding to the individual vehicle part.

Example 17. The system of Example 16, wherein the operations comprise: retrieving a first plurality of vehicle identifiers associated with the first vehicle grouping identifier; and retrieving a plurality of vehicle tokens associated with the first plurality of vehicle identifiers.

Example 18. The system of Example 17, wherein the operations comprise: generating a response to the request comprising the plurality of vehicle tokens associated with the first plurality of vehicle identifiers.

Example 19. A method comprising: maintaining, by one or more processors, a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier; accessing a listing for a vehicle part associated with a vehicle, the listing comprising vehicle fitment information including a vehicle identifier; searching, based on the vehicle identifier, for the vehicle part in the compatibility catalog to retrieve the set of vehicle tokens associated with the vehicle identifier; and automatically updating the vehicle fitment information in the listing for the vehicle part based on the set of vehicle tokens retrieved from the compatibility catalog and the vehicle fitment data.

Example 20. A machine-storage medium for storing instructions that, when executed by one or more hardware processors, cause the one or more hardware processors to perform operations comprising: maintaining a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier; accessing a listing for a vehicle part associated with a vehicle, the listing comprising vehicle fitment information including a vehicle identifier; searching, based on the vehicle identifier, for the vehicle part in the compatibility catalog to retrieve the set of vehicle tokens associated with the vehicle identifier; and automatically updating the vehicle fitment information in the listing for the vehicle part based on the set of vehicle tokens retrieved from the compatibility catalog and the vehicle fitment data.

Although examples have been described, it will be evident that various modifications and changes may be made to these examples without departing from the broader scope of the present disclosure. Accordingly, the specification and drawings are to be regarded in an illustrative rather than a restrictive sense. The accompanying drawings that form a part hereof, show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This Detailed Description, therefore, is not to be taken in a limiting sense, and the scope of various examples is defined only by the appended claims, along with the full range of equivalents to which such claims are entitled.

Although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example.

## Claims

1. A system comprising:
one or more hardware processors;
at least one machine-storage medium for storing instructions that, when executed by the one or more hardware processors, cause the one or more hardware processors to perform operations comprising:
maintaining a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier;
accessing a listing for a vehicle part associated with a vehicle, the listing comprising vehicle fitment information including a vehicle identifier;
searching, based on the vehicle identifier, for the vehicle part in the compatibility catalog to retrieve the set of vehicle tokens associated with the vehicle identifier; and
automatically updating the vehicle fitment information in the listing for the vehicle part based on the set of vehicle tokens retrieved from the compatibility catalog and the vehicle fitment data.

2. The system of claim 1, wherein the compatibility catalog includes a notional profile grouping service that stores the set of vehicle tokens, and wherein the operations further comprise:
receiving a user opt-in status indicating whether automatic enhancement of vehicle fitment information is enabled for listings associated with the user; and
in response to determining that the opt-in status indicates that the automatic enhancement is enabled for the listing, automatically triggering updating the vehicle fitment information in the listing for the vehicle part based on the set of vehicle tokens retrieved from the compatibility catalog.

3. The system of claim 1 or 2,
wherein the operations further comprise:
receiving a user opt-in status indicating whether automatic enhancement of vehicle fitment information is enabled for listings associated with the user; and
in response to determining that the opt-in status indicates that the automatic enhancement is disabled for the listing, automatically preventing updating the vehicle fitment information in the listing for the vehicle part based on the set of vehicle tokens retrieved from the compatibility catalog;
wherein the operations optionally further comprise triggering a rollback of enhanced vehicle fitment information for the listing.

4. The system of any one of the preceding claims,
wherein the operations further comprise generating fitment status events tracking changes made to vehicle fitment information;
wherein the set of vehicle tokens optionally comprise year, model, make, and trim information.

5. The system of any one of the preceding claims, wherein the operations comprise:
detecting a status change associated with the listing; and
based on the status change, selecting whether to enhance or clean the vehicle fitment information in the listing.

6. The system of claim 5, wherein the operations comprise:
detecting, as the status change, a change to a naming convention of an individual vehicle token;
determining that the individual vehicle token is included as part of the vehicle fitment information; and
automatically cleaning the vehicle fitment information in the listing by updating the naming convention of the individual vehicle token in the listing.

7. The system of claim 5, wherein the operations comprise:
detecting, as the status change, that the listing has been updated to include the vehicle fitment information comprising a first group of vehicle tokens; and
automatically enhancing the vehicle fitment information in the listing by adding a second group of vehicle tokens to the listing.

8. The system of any one of the preceding claims,
wherein the operations comprise:
storing a database comprising the compatibility catalog, the database associating different parts with different vehicle grouping identifiers, each vehicle grouping identifier associated with a set of vehicle identifiers, each vehicle identifier in the set of vehicle identifiers being associated with a respective set of vehicle tokens;
wherein a first part is optionally associated with a first vehicle grouping identifier, the first vehicle grouping identifier being optionally associated with a first plurality of vehicle identifiers, and wherein the first plurality of vehicle identifiers optionally comprises a first vehicle identifier associated with a first set of vehicle tokens and a second vehicle identifier associated with a second set of vehicle tokens.

9. The system of claim 8, wherein the operations comprise:
detecting that the listing comprises the vehicle part;
searching the database to retrieve a first vehicle grouping identifier corresponding to the vehicle part;
retrieving a first plurality of vehicle identifiers associated with the first vehicle grouping identifier;
retrieving a plurality of vehicle tokens associated with the first plurality of vehicle identifiers; and
automatically adding the plurality of vehicle tokens associated with the first plurality of vehicle identifiers to the listing.

10. The system of claim 9, wherein the operations comprise:
after automatically adding the plurality of vehicle tokens associated with the first plurality of vehicle identifiers to the listing, modifying the first vehicle grouping identifier associated with the vehicle part; and
automatically updating the plurality of vehicle tokens associated with the first plurality of vehicle identifiers of the listing to reflect the modified first vehicle grouping identifier.

11. The system of claim 9 or 10,
wherein the operations comprise:
determining a part type for the vehicle part that is in the listing; and
selecting which subsets of vehicle tokens to extract from the plurality of vehicle tokens to be added to the listing based on the part type, wherein a first group of vehicle tokens are extracted for a first part type and a second group of vehicle tokens are extracted for a second part type;
wherein the operations optionally comprise:
determining a geographical location associated with the listing; and
selecting which subsets of vehicle tokens to extract from the plurality of vehicle tokens to be added to the listing based on the geographical location, wherein a first group of vehicle tokens are extracted for a first geographical location and a second group of vehicle tokens are extracted for a second geographical location.

12. The system of any one of claims 8 to 11, wherein the operations comprise:
receiving a request for vehicle tokens associated with an individual vehicle part; and
searching the database to retrieve a first vehicle grouping identifier corresponding to the individual vehicle part.

13. The system of claim 12,
wherein the operations comprise:
retrieving a first plurality of vehicle identifiers associated with the first vehicle grouping identifier; and
retrieving a plurality of vehicle tokens associated with the first plurality of vehicle identifiers;
wherein the operations optionally comprise:
generating a response to the request comprising the plurality of vehicle tokens associated with the first plurality of vehicle identifiers.

14. A method comprising:
maintaining, by one or more processors, a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier;
accessing a listing for a vehicle part associated with a vehicle, the listing comprising vehicle fitment information including a vehicle identifier;
searching, based on the vehicle identifier, for the vehicle part in the compatibility catalog to retrieve the set of vehicle tokens associated with the vehicle identifier; and
automatically updating the vehicle fitment information in the listing for the vehicle part based on the set of vehicle tokens retrieved from the compatibility catalog and the vehicle fitment data.

15. A machine-storage medium for storing instructions that, when executed by one or more hardware processors, cause the one or more hardware processors to perform operations comprising:
maintaining a compatibility catalog storing vehicle fitment data separately from listing data, the vehicle fitment data comprising a set of vehicle tokens that describe vehicle characteristics for determining compatibility of parts, each set of vehicle tokens stored in the compatibility catalog being associated with a respective vehicle identifier;
accessing a listing for a vehicle part associated with a vehicle, the listing comprising vehicle fitment information including a vehicle identifier;
searching, based on the vehicle identifier, for the vehicle part in the compatibility catalog to retrieve the set of vehicle tokens associated with the vehicle identifier; and
automatically updating the vehicle fitment information in the listing for the vehicle part based on the set of vehicle tokens retrieved from the compatibility catalog and the vehicle fitment data.
